(19) Europäisches Patentamt
European Patent Office
Office européen des brevets

(11) **EP 4 322 117 A1**

(12) **EUROPEAN PATENT APPLICATION**

(43) Date of publication:
**14.02.2024 Bulletin 2024/07**

(21) Application number: **22306221.7**

(22) Date of filing: **12.08.2022**

(51) International Patent Classification (IPC):
**G06V 10/44** (2022.01)    **G06V 10/46** (2022.01)

(52) Cooperative Patent Classification (CPC):
**G06V 10/443; G06V 10/467; G06V 10/473**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ANOTHER BRAIN**
**75009 Paris (FR)**

(72) Inventors:
• **PIRIM, Patrick**
**75009 PARIS (FR)**
• **DER AGOBIAN, Sophie**
**75009 PARIS (FR)**

(74) Representative: **Atout PI Laplace**
**Immeuble "Visium"**
**22, avenue Aristide Briand**
**94117 Arcueil Cedex (FR)**

(54) **METHOD AND SYSTEM FOR ENCODING A SUBJECT FORM FROM A MATRICIAL DATASET**

(57)     A form comprising Linear Features discernible in a data space is encoded by defining each linear feature in terms of an opening angle between 180° and -180° and a direction between 0 and 360°, and where each linear feature is specified by reference to one of a set of predefined contiguous, non-overlapping regions in a two dimensional space representing opening angle values in a first said dimension, and direction values in a second said dimension, where said set of ranges cover in aggregate the entirety of said two dimensional space.

Fig 11a

## Description

### Field of the invention

The invention relates to extracting and representing features from matricial datasets. Matricial datasets include raster images or other types of data that may meaningfully be represented in a two dimensional matrix of energy values. Features in this sense means groupings of energy values susceptible of semantic description.

### Background of the invention

In the field of graphics processing, functions have been developed over recent decades to detect salient features in images such as the edges of a contiguous object.

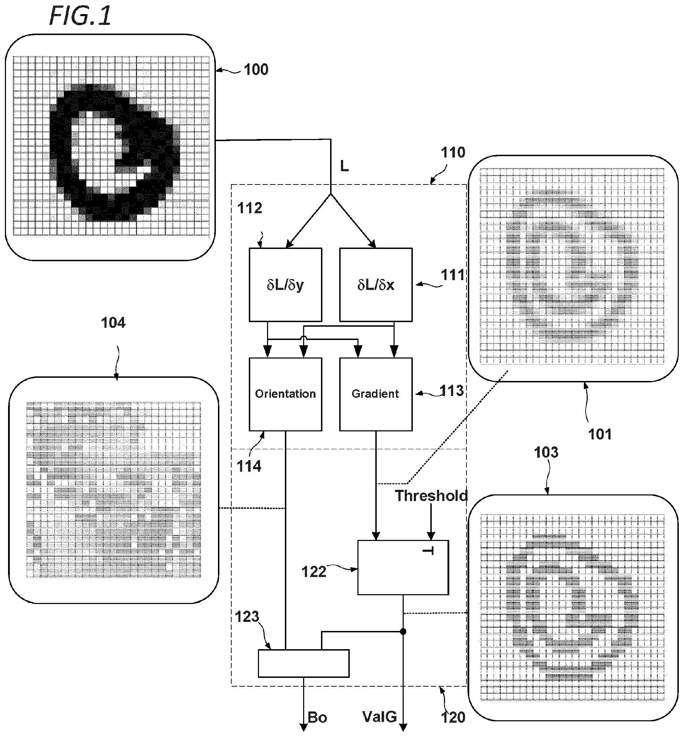

Figure 1 represents schematically a mechanism for detecting edges in a digital image. This mechanism is known for example from French patent FR2858447. By way of example, the operation of this mechanism will be described in the context of processing the image 100, where darker shading represents a higher intensity value, e.g. on a scale of 0 to 255. The skilled person will appreciate that the mechanism may be extended to other image formats in terms of size, luminance and colour range as outlined above.

As shown, luminance values for the pixels of the raster image are processed to derive a rate of change ($\delta L/\delta x$) of luminance in the x direction, and a rate of change ($\delta L/\delta y$) of luminance in the y direction. This is represented schematically by operational units 111 and 112 in figure 1.

It will be appreciated that the rate of change for either axis may be calculated over more than one pixel, and may be calculated in either direction along the axis, or indeed in both directions. By way of example, the following example will calculate the variation across a 3x3 matrix centred on the pixel under consideration.

As shown in figure 1, the outputs of units 111 and 112 defining the rates of change in luminance in the x and y axes respectively are output to two further operational units 113 and 114.

Unit 113 calculates the square root of the sum of the squares of the respective rates of change in luminance in the x and y axes respectively to obtain a Gradient value (Grad).

$$Grad = \sqrt{\left(\frac{dL}{dx}\right)^2 + \left(\frac{dL}{dy}\right)^2}$$

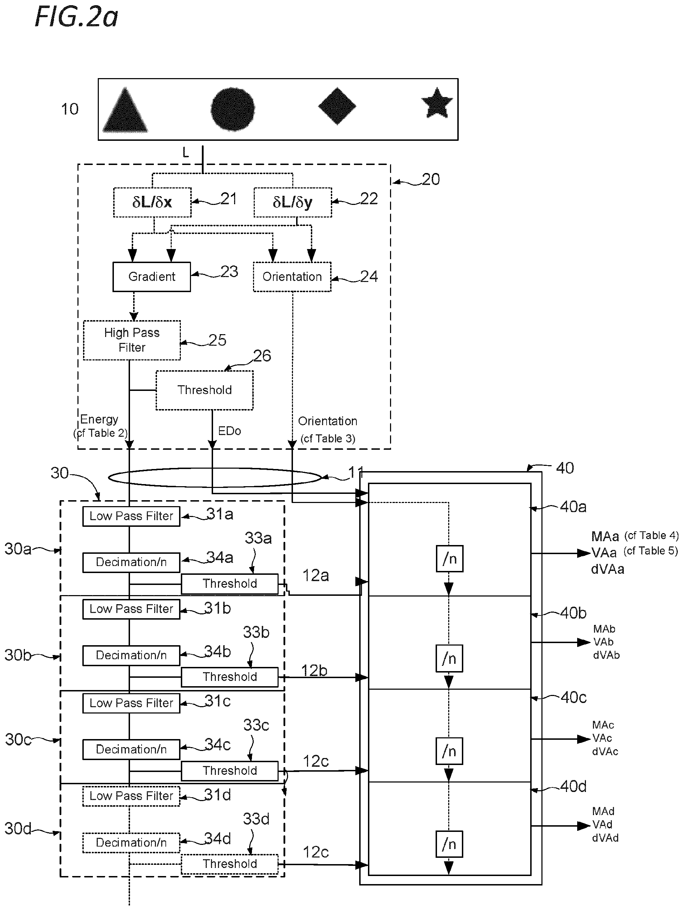

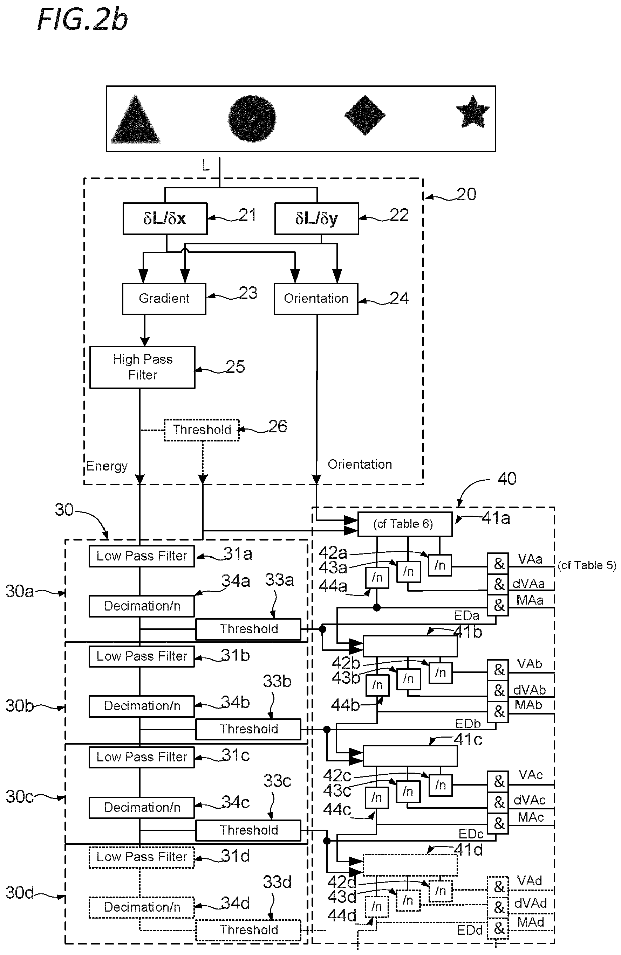

The complete set of Grad values obtainable for the respective pixels at the output of unit 122 in the example of figure 1 is graphically represented in element 103 of figure 2.

Unit 114 calculates the arc tangent of the sum of the rate of change in luminance in the x divided by the rate of change in luminance in the x divided respectively to obtain an Orientation value (Dir).

$$Dir = \text{Atan} \frac{\frac{dL}{dx}}{\frac{dL}{dy}} + 90°$$

Atan is coded from -90° to +90° since Dir is represented in terms of values between 0 and 180°, and may be distinguished from Atan2, which is coded form -180° to +180°, so as to reflect values tangential to the edge.

On this basis, a $\theta$ value of 0 corresponds to a horizontal line, a $\theta$ value of 45 corresponds to an upward slope from left to right (/), a $\theta$ value of 90 corresponds to a vertical line, and a Dir value of 135 corresponds to a downward slope from left to right (\\).

Since all lines with an angle that is a multiple of 45° can be described in these terms, angles between 181 and 259 degrees can be mapped onto corresponding values within this range.

The information present in such matricial datasets is far greater than that extracted by these basic operations, and it is desirable to provide methods and systems for encoding additional such information, in particular as regards semantic content thereof.

### Summary of the Invention

In accordance with the present invention in a first aspect there is provided a method of encoding a subject form comprising one or more linear features,

each linear feature being defined in terms of an opening angle between 180° and -180° and a direction between 0 and 360°,

the method comprising the step of associating each linear feature with one of a set of predefined contiguous, non-overlapping regions in a two dimensional space representing opening angle values in a first dimension, and direction values in a second dimension, where set of ranges cover in aggregate the entirety of the two dimensional space.

In a development of the first aspect, the step of associating comprises a step of determining for each linear feature an alignment coefficient representing the distance of the position defined by the opening angle value and direction angle of the linear feature in the two dimensional space from the barycenter of each respective region with which the linear feature is associated.

In a development of the first aspect, the alignment coefficient is calculated for each the linear feature with respect to each region in the two dimensional space.

In a development of the first aspect, the coefficient is calculated for each region adjacent to the region in which the linear feature falls.

In a development of the first aspect, each linear feature is further defined by a radius value.

In a development of the first aspect, the method comprises the further step of providing a first set of candidate forms from a reference form set each defined in terms of a set of one or more regions, the method comprising a further step of determining that none of the candidate forms corresponds to the subject form to a predetermined threshold, and adding the subject form to the from a reference form set.

In a development of the first aspect, the method comprises the further step of providing a first set of candidate forms from a reference form set each defined in terms of a set of one or more regions, the method comprising a further step of determining which the candidate form corresponds most closely to the subject form, and classifying the subject form as an instance of the candidate form corresponding most closely to the subject form.

In a development of the first aspect, the step of determining which the candidate form corresponds most closely to the subject form comprises calculating a matching value corresponding to the mean alignment coefficient of each range constituting the target form correspondingly defined in a respective candidate form, across the regions specified by that respective candidate form, where the candidate form having the highest matching value is deemed to correspond most closely to the subject form.

In a development of the first aspect, each candidate form is associated with metadata reflecting the average of the opening angle of the linear features constituting that candidate form and the variance of the opening angle of the linear features constituting that candidate form, and wherein the step of determining which the candidate form corresponds most closely to sais subject form comprises a further step of preselecting the candidate forms from a reference form set on the basis of a correspondence between the average of the opening angle of the linear features constituting the subject form and the variance of the opening angle of the linear features constituting the subject form and said metadata for each reference form in the reference form set.

In a development of the first aspect, the method comprises a further step of sorting the reference forms in a memory so as to group the reference forms by a similarity of the respective metadata, wherein the step of preselecting the candidate forms comprises retrieving the candidate forms from the memory.

In a development of the first aspect, the metadata further comprises the average of the radius of the linear features constituting that candidate form, and the variance of the radius of the linear features constituting that candidate form.

In a development of the first aspect, each linear feature is further defined by a radius value.

In a development of the first aspect, each region is associated with a reference code, and wherein each candidate form is represented by a codeword concatenating the reference codes.

In a development of the first aspect, the regions are defined as rectangular regions in the two dimensional space, corresponding to the intersection of a respective predefined range of opening angle values in the first dimension of the two dimensional space, and a respective predefined range of direction values in the second dimension of the two dimensional space.

In a development of the first aspect, the increment in opening angle between each successive predefined range of opening angle values in the first dimension of the two dimensional space is equal to 45°.

In a development of the first aspect, the increment in direction angle between each successive predefined range of direction angle in the second dimension of the two dimensional space is equal to 45°.

In a development of the first aspect, the regions are redefined to optimally conform to a learned distribution of linear features in the two dimensional space.

In a development of the first aspect, the method comprises the further steps of receiving an indication of a target form belonging to a second set of candidate forms each defined in terms of a set of one or more regions, for identification in an input dataset, decomposing the target form to obtain a graphical representation thereof, using the graphical representation as a classifier of the incoming dataset, and applying the resulting classified data as a salient.

In a development of the first aspect, the method the structure of the codeword reflects the sequence of interconnected linear features in a predefined direction of travel.

In a development of the first aspect, the regions are assigned a position in a region sequence, and the structure of the codeword reflects the interconnected linear features in the order of the position of the region in the region sequence with which each respected linear feature is associated.

In accordance with the present invention in a second aspect there is provided a system for encoding a subject form comprising one or more linear features,

each linear feature being defined in terms of an opening angle between 180° and -180° and a direction between 0 and 360°,

the system being adapted to perform the operations of associating each linear feature with one of a set of predefined contiguous, non-overlapping regions in a two dimensional space representing opening angle values in a first dimension, and direction values in a second dimension, where the set of ranges cover in aggregate the entirety of the two dimensional space.

In accordance with the present invention in a third aspect there is provided a computer program comprising instructions which, when the program is executed by a computer, cause the computer to carry out the method of the first aspect.

In accordance with the present invention in a fourth aspect there is provided a computer-readable medium comprising instructions which, when executed by a computer, cause the computer to carry out the method of the first aspect.

In accordance with the present invention in a fifth aspect there is provided a data structure system for encoding a subject form comprising one or more linear features, each linear feature being defined in terms of an opening angle between 180° and - 180° and a direction between 0 and 360°, the data structure defining each linear feature with reference one of a set of predefined contiguous, non-overlapping regions in a two dimensional space representing opening angle values in a first dimension, and direction values in a second dimension, where the set of ranges cover in aggregate the entirety of the two dimensional space.

**Brief Description of the Drawings**

The above and other advantages of the present invention will now be described with reference to the accompanying drawings, for illustration purposes only, in which:

Figure 1 represents schematically a mechanism for detecting edges in a digital image;
Figure 2a presents schematically functional elements of a system for encoding semantic content in an input planar data set in accordance with an embodiment;
Figure 2b presents schematically functional elements of a system for encoding semantic content in an input planar data set in accordance with a further embodiment;
Figure 3 presents a method of encoding in accordance with an embodiment;
Figure 4a presents an exemplary set of values of MA as extracted from an input data set;
Figure 4b presents an exemplary set of values of VA as extracted from the same input data set as figure 4a;
Figure 4c presents an exemplary set of values of dVA as extracted from the same input data set as figure 4a;
Figure 4d presents a histogram of VA and dVA value combinations, as extracted by way of example from the data presented in figures 4b and 4c;
Figure 5 presents certain exemplary aspects of a mechanism for compiling a regional average angular deviation map in accordance with certain embodiments;
Figure 6 presents a linear feature identified as a result of the mechanism described with respect to figure 5;
Figure 7 presents a representation of the semantic content of the data of figure 4 in terms of a plurality of linear features;
Figure 8 presents a method of encoding in accordance with an embodiment;
Figure 9a presents a geometrical representation of an arc in accordance with embodiments;
Figure 9b represents how the geometric descriptions discussed above may represent a continuous variation from linear feature to circle;
Figure 10 shows an example of a family of linear features;
Figure 11a shows characteristic plots for a triangular shape;
Figure 11b shows characteristic plots for an approximately square shape;
Figure 11c shows characteristic plots for a circular shape;

Figure 11d shows characteristic plots for an ovoid shape as described with reference to figure 7;

Figure 12 presents a method of encoding in accordance with an embodiment;

Figure 13 presents examples of transformations that may be implemented on the basis of the representation discussed with reference to figures 10 to 12.

Figure 14 presents schematically the functional units arranged in accordance with certain embodiments;

Figure 15 presents a second schematic system structure in accordance with an embodiment addressing certain data sequence output scenarios;

Figure 16 presents a first schematic system structure in accordance with an embodiment addressing certain data sequence comparison scenarios;

Figure 17 provides an overview of an exemplary data structure storing forms; and

Figure 18 shows a generic computing system suitable for incorporating or implementing processing in accordance with certain embodiments of the invention.

Like numbered elements are intended to correspond to their counterparts in other figures unless otherwise noted.

## Detailed description

Embodiments relate to encoding a subject form comprising one or more linear features, each said linear feature being defined in terms of an opening angle between 180° and -180° and a direction between 0 and 360°.

To provide a basis for the better understanding of these embodiments, one possible set of operations will first be described for obtaining a suitable such representation. It may be borne in mind that this is merely one possible approach provided for the convenience of the reader, and that other suitable approaches may occur to the skilled person.

Figure 2a presents schematically functional elements of a system for encoding semantic content in an input planar data set in accordance with an embodiment.

An input planar data set 11 defines a plurality of cells in a plane, each cell being defined in terms of an energy value and an orientation. It may be considered that this data may implicitly incorporate a validation in that un-validated values are set to a null value, which has no physical interpretation, such as "-1" or the like.

As such, the input planar data 11 set may correspond to a digital image, a chronological set of sound energy values, a chronological set of pressure values, or the like. The cells may be hexagonal, square, or of any other tessellating polygon. The following embodiments will be described by way of example in the context of a square matrix, but the skilled person will recognize that the underlying principles may be adapted to any matrix structure.

As shown, the input planar data set 11 comprising cells defined in terms of an energy value and an orientation is provided by an optional pre-processing module 20. As shown, this pre-processing module 20 receives raw input data 10 defined in terms of a matrix of intensity values (e.g. representing luminance in a raster image), and comprises a first operational sub-unit 21 adapted to derive a rate of change ($\delta L/\delta x$) of intensity in the x direction, and a second operational sub-unit 22 adapted to derive a rate of change ($\delta L/\delta y$) of intensity in the y direction. Subject to the preceding comments concerning the implicit validation of values, it will be appreciated that the rate of change for either axis may be calculated over more than one pixel, and may be calculated in either direction along the axis, or indeed in both directions. By way of example, the following example will calculate the variation across a 3x3 matrix centred on the pixel under consideration.

As shown in figure 2a the outputs of units 21 and 22 defining the rates of change in luminance in the x and y axes respectively are output to two further operational units 23 and 24.

Unit 23 calculates the square root of the sum of the squares of the respective rates of change in luminance in the x and y axes respectively to obtain a Gradient value (Grad).

$$Grad = \sqrt{\left(\frac{dL}{dx}\right)^2 + \left(\frac{dL}{dy}\right)^2}$$

Unit 24 calculates the arc tangent of the sum of the rate of change in luminance in the x divided by the rate of change in luminance in the x divided respectively to obtain an Orientation value (0),in a range between 0 and 180°, on the basis that any figure beyond 180° can be processed as an identical rotated image.

$$\theta = \tan^{-1}\frac{\dfrac{dL}{dx}}{\dfrac{dL}{dy}} + 90°$$

On this basis, a θ value of 0 corresponds to a horizontal line, a θ value of 45 corresponds to an upward slope from left to right (/),a θ value of 90 corresponds to a vertical line, and a θ value of 135 corresponds to a downward slope from left to right (\).

Furthermore as shown the output of unit 23 is further subjected to an optional high pass filter 25. High pass filter 25 is a two dimensional filter, which may advantageously "sharpen" the data.

Generally speaking, the number of cells across which the high pass filter operates is a compromise between noise and resolution, where a smaller filter increases the level of noise, while retaining more resolution.

Although the two dimensional high pass filter may operate across any desired number of cells (in principle up to the resolution of the dataset to which it is applied), good results have been obtained with a filter operating over a region covering N positions removed from the cell under consideration in each direction, where N is the value of the downscaling factor.

Although any convenient high pass filter function may be used, good results have been obtained with a Laplacian of Gaussian, or "Mexican hat" filter. The output of the filter 25 represents the edge energy of the corresponding position in the dataset, where each edge energy value may be associated with the corresponding orientation value output by module 24, to constitute the input planar data set 11.

As shown, pre-processing module 20 further comprises a threshold module 26 tagging pixels falling below a noise threshold. This is output in an Energy validation value EDo.

The output of the threshold module 26 may comprise a binary indication of whether the threshold is met, or a representation of the energy value itself, wherein invalidated values are set to a null value, which has no physical interpretation, such as "-1" or the like, or otherwise.

Thus, module 20 provides one possible exemplary mechanism for obtaining an input planar data set 11 defining a plurality of cells in a plane, each cell being defined in terms of an energy value and an orientation, as required by the present invention. The skilled person will recognise that other approaches exist, and that this processing may be performed independently and separately in time and/or space from the further operations defined below.

As shown, figure 2a further provides a down-sampling module 30. Down-sampling module 30 is adapted to down-sample the input planar dataset to obtain a plurality of reduced planar datasets, corresponding to successive reductions in scale by a predetermined factor.

As shown in figure 2a, this is achieved by a series of down sampling stages 30a, 30b, 30c, 30d,... where each stage receives the down sampled output of the preceding stage, performs a further reduction in scale, and then outputs it to the next stage.

By way of example, figure 2a presents four levels of down-sampling, at respective down-sampling stages 30a, 30b, 30c, 30d,... however it will be appreciated that any number of stages may be provided, depending in particular on the characteristics of the incoming data, for instance the ratio of receptive field size to receptive field centre, corresponding to cortical magnification factors in cortical regions V1, V2. For example, the number of provided stages may be determined by the resolution of the original input planar data set and/or the level of detail visible in the image independently of resolution, as discussed further below, on the basis that sufficient down-sampling stages, of a particular down-sampling factor, or series of factors, will necessarily bring the scale down to less than one, which is of course meaningless. As will become clear from the following discussing, in preferred embodiments the number of levels of down sampling (including the native, un-down sampled data) may be three.

Although the factor may be any value, and may differ from one stage to the next, a fixed factor of three across all levels has been found to offer very good performance.

As shown, each down-sampling stage 30a, 30b, 30c, 30d,... is represented by the conventional combination of a respective Low Pass filter 31a, 31b, 31c, 31d ...followed by a decimation unit 34a, 34b, 34c, 34d,... i.e., corresponding to the definition of a scale reduction according to the Nyquist / Shannon criterion, as often expressed as down-sampling by w with a matrix filter of 2w+1.

Accordingly, the down sampling operation may comprise performing a two dimensional low pass filter operation followed by a decimation operation corresponding to the predetermined factor to obtain a first reduced planar dataset, and successively performing the low pass filter operation followed by a decimation operation on each reduced planar data set to obtain a series of further reduced planar dataset.

The two dimensional low pass filter 31a, 31b, 31c, 31d defines a weighting applied for each position across a region centred on a position currently under consideration. Since the calculations for positions at the edge of the matrix call for values beyond the edge of the matrix, a band of neutral values may be added outside the calculated matrix at each scale to support these calculations. The region is defined as having a diameter equal to twice the factor by which decimation is performed, plus one. That is to say, where the factor is three, the low pass filter operates across a seven by seven matrix. Any low pass filter function may be used (even setting all weighting values across the matrix to one).A set of values proportional to two to the power of the distance of the centre of that position from the cell under consideration, divided by 3, has been found to offer good performance, for example as presented in the following table.

**Table 1**

| | a | | | | | | | |
|---|---|---|---|---|---|---|---|---|
| | | -3 | -2 | -1 | 0 | 1 | 2 | 3 |
| | 3 | | | 15 | 16 | 15 | | |
| | 2 | | 17 | 19 | 20 | 19 | 17 | |
| | 1 | 15 | 19 | 23 | 25 | 23 | 19 | 15 |
| b | 0 | 16 | 20 | 25 | 32 | 25 | 20 | 16 |
| | -1 | 15 | 19 | 23 | 25 | 23 | 19 | 15 |
| | -2 | | 17 | 19 | 20 | 19 | 17 | |
| | -3 | | | 15 | 16 | 15 | | |

It may be noted that the aggregate weighting effect of the filter presented above is 708, corresponding to a substantial amplification. To restrain this effect, values obtained on this basis may be multiplied by an adjustment factor. A factor of 1/708 would give an overall gain of 1, but it has been found advantageous in some cases to retain a degree of amplification. Selecting a reciprocal of a power of two for this factor has the benefit of simplifying the multiplication in digital (binary) circuits. A value of 1/256 has been found to be effective in this regard.

Accordingly, the coefficients reflect a circular matrix of diameter 7r, where r is the elementary radius of a square cell. The values presented on this basis in table 1 above are in the form $C(r\Theta) = K.2^{-r/3}$ centred on the position (ij) , where $\Theta=0$ horizontal to the right with, $\Theta$ turning in the trigonometric direction (anticlockwise in this case) and K being a gain factor which may be equal to 1 by way of example.

As shown, each down sampling stage 30a, 30b, 30c, 30d,... further comprises a threshold module 33a, 33b, 33c, 33d,... , tagging pixels falling below a noise threshold. This is output in an Energy validation value EDa, EDb, EDc....

The output of the threshold modules 33a, 33b, 33c, 33d,may comprise a binary indication of whether the threshold is met, or a representation of the energy value itself, wherein invalidated values are set to a null value, which has no physical interpretation, such as "-1" or the like, or otherwise.

The down-sampling stages 30a, 30b, 30c, 30d,... of the down-sampling module accordingly output a series of respective reduced datasets 12a, 12b, 12c, 12d... corresponding to the input data set 11 at different levels of down-sampling.

On this basis, a set of working datasets comprising the original planar dataset 11 and/or reduced working datasets 12a, 12b, 12c, 12d... may be obtained, and passed to processing module 40.

Processing module 40 is adapted for each position of each respective working data set to calculate in a matrix approximating a circle having a diameter equal to twice said factor, plus one, determining:

○ the average of the edge orientation across said matrix weighted by the energy value of the position under consideration (MA),
○ the variation of the orientations across said matrix (VA),
○ the local variation in the obtained map of VA values with respect to the preceding said position (dVA). This may be obtained for example across a 3x3 matrix over the obtained map of VA values.

For example, a set of intensity values as set out below may be under consideration. It will be appreciated that the operations described with respect to the values of table 2 may be applied to obtain values of MA, VA and dVA independently of the multi-scale structure of figures 2a and 2b, e.g. to obtain values at a single arbitrary scale as required. Figures 2a incorporates references to tables 2, 3, 4 and 5 as discussed below, to indicate where the respective values are available. In particular, the values of Table 2 at the highest scale are output by the high pass filter 25, the values of Table 3 at the highest scale are output by the orientation unit 24, the values of Tables 4 , 5 and 7 are output by unit 40, with the values of table 6 being derived within unit 41 as shown in figure 2b.

7

**Table 2**

| 0 | 0 | 0 | 0 | 0 | 0 | 0 | 0 | 0 | 0 |
|---|---|---|---|---|---|---|---|---|---|
| 0 | 0 | 0 | 0 | 0 | 0 | 0 | 0 | 0 | 0 |
| 0 | 0 | 0 | 0 | [0] | [0] | [0] | 0 | 0 | 0.69 |
| 0 | 0 | 0 | [0] | [0] | [0] | [0] | [0] | 0.83 | 0.93 |
| 0 | 0 | [0] | [0] | [0.3] | [0.69] | [0.86] | [0.88] | [0.75] | 0 |
| 0 | 0 | [0] | [0] | [0.39] | {0.63} | [0] | [0] | [0] | 0 |
| 0 | 0 | [0] | [0] | [0] | [0.73] | [0.92] | [0.71] | [0] | 0 |
| 0 | 0 | 0 | [0] | [0] | [0] | [0.54] | [0.84] | 0.83 | 0.52 |
| 0 | 0 | 0 | 0 | [0] | [0] | [0] | 0 | 0.72 | 0.91 |
| 0 | 0 | 0 | 0 | 0 | 0 | 0 | 0 | 0 | 0.56 |

Correspondingly, a set of orientation values (Dir) multiplied by two as set out below may be under consideration (values of -1 relating to values not meeting the threshold of unit 26, and thereby null).

**Table 3**

| -1 | -1 | -1 | -1 | -1 | -1 | -1 | -1 | -1 | -1 |
|---|---|---|---|---|---|---|---|---|---|
| -1 | -1 | -1 | -1 | -1 | -1 | -1 | -1 | -1 | -1 |
| -1 | -1 | -1 | -1 | [-1] | [-1] | [-1] | -1 | -1 | 36 |
| -1 | -1 | -1 | [-1] | [-1] | [-1] | [-1] | [-1] | 46 | 36 |
| -1 | -1 | [-1] | [-1] | [140] | [140] | [136] | [124] | [92] | -1 |
| -1 | -1 | [-1] | [-1] | [180] | [182] | [-1] | [-1] | [-1] | -1 |
| -1 | -1 | [-1] | [-1] | [-1] | [224] | [228] | [230] | [-1] | -1 |
| -1 | -1 | -1 | [-1] | [-1] | [-1] | [256] | [266] | 280 | 290 |
| -1 | -1 | -1 | -1 | [-1] | [-1] | [-1] | -1 | 296 | 302 |
| -1 | -1 | -1 | -1 | -1 | -1 | -1 | -1 | -1 | 304 |

The average of the edge orientation across the matrix weighted by the energy value of the position under consideration (MA) having a value from 0 to 180 degrees may be derived, obtaining an average cosine value across the matrix, as represented by the operation:

$$C(i.j) = \sum_{\substack{-3 \leq a \leq 3 \\ -3 \leq b \leq 3}} E(a,b).Cos(Dir)(a,b)$$

In this and the following calculations, the following terms are defined:

i is the horizontal position of the centre of the matrix in the working planar dataset

j is the vertical position of the centre of the matrix in the working planar dataset a is the horizontal position of a cell in the matrix

b is the vertical position of the cell in the matrix

E(a,b) is the Energy of the cell of the matrix under consideration

Dir(a,b) is the orientation value of the cell of the matrix under consideration

n is the sequential position of the cell currently under consideration.

For example, obtaining an average Cos value across the matrix for corresponding values of E from Table 2 and Dir from Table 3, we obtain, for the position whose value is presented in a curly bracket, taking into account the values of each position in brackets (square or curly), as follows:

$$C=0.3\times\cos(140)+0.69\times\cos(140)+0.86\times\cos(136)+0.88\times\cos(124)+0.75\times\cos(92)+0.39\times\cos(180)+0.63\times\cos(182)+0.73\times\cos(224)+0.92\times\cos(228)+0.71\times\cos(230)+0.54\times\cos(256)+0.84\times\cos(266)$$

C=-4.70

Bearing in mind that as discussed in the description of the background art, Dir corresponds to an orientation between 0-180°, the orientation value must be multiplied by 2 to obtain the corresponding Dir value for the calculation of VA. In a system operating at multiple scales as shown in figure 2a or 2b a value of MA of a previous stage may be multiplied by 2 to obtain the corresponding Dir value for the calculation of VA for successive levels.

Meanwhile, an average sine value may be obtained across the matrix for corresponding values of E, as represented by the operation:

$$S(i,j) = \sum_{\substack{-3 \leq a \leq 3 \\ -3 \leq b \leq 3}} E(a,b).Sin(Dir)(a,b)$$

For example, obtaining an average sine value across the matrix for corresponding values of E from Table 2 and Dir from Table 3, we obtain:

$$S=0.3\times\sin(140)+0.69\times\sin(140)+0.86\times\sin(136)+0.88\times\sin(124)+0.75\times\sin(92)+0.39\times\sin(180)+0.63\times\sin(182)+0.73\times\sin(224)+0.92\times\sin(228)+0.71\times\sin(230)+0.54\times\sin(256)+0.84\times\sin(266)=-0.41$$

Bearing in mind that as discussed in the description of the background art, Dir corresponds to an orientation between 0-180°, the orientation value must be multiplied by 2 to obtain the corresponding Dir value for the calculation of VA. In a system operating at multiple scales as shown in figure 2a or 2b a value of MA of a previous stage may be multiplied by 2 to obtain the corresponding Dir value for the calculation of VA for successive levels.

Thereby the average of the edge orientation across said matrix weighted by the energy value of the position under consideration (MA) may be obtained, as represented by the operation:

$$MA = Atan\frac{S(i,j)}{C(i,j)}+90° \text{ (from 0° to 180°)}$$

Accordingly, for the example based on tables 2 and 3, we obtain a value for the position in curly brackets of:MA=90+atan(-0,41/-4,70) = 90,1°

Applying this approach to the Intensity values and Dir values x 2 presented above in table 3, we obtain the MA value presented in table 4 below. Each position in the matrix may be obtained by corresponding operations, although these are not presented here for the sake of simplicity.

**Table 4**

|  |  |  |  |  |  |  |  |  |
|--|--|--|--|--|--|--|--|--|
|  |  |  |  |  |  |  |  |  |
|  |  |  |  |  |  |  |  |  |

(continued)

| | | | | | | | | |
|---|---|---|---|---|---|---|---|---|
| | | | | | | | | |
| | | | | | | | | |
| | | | 90,1 | | | | | |
| | | | | | | | | |
| | | | | | | | | |
| | | | | | | | | |
| | | | | | | | | |

Obtaining the deviation va from the average orientation MA, as represented by the operation:

$$\mathrm{va(i,j)} = 180.\left(1 - \frac{\sqrt{C^2(i,j) + S^2(i,j)}}{\sum_{\substack{-3 \le a \le 3 \\ -3 \le b \le 3}} E(a,b)}\right.$$

Calculating the lower part of this fraction with the values provided in Table 2, we obtain

Sum E=0,3+0,69+0,86+0,88+0,75+0,39+0,63+0,73+0,92+0,71+0,54+0,84=8,24

So that

va=180x(1-(SQRT(S²+C²))/Sum E)=76,92°

We may then obtain the variation of the orientations across said matrix (VA) from the deviation va, as represented by the operation:
VA = Ln(va + 1)= 4.36, to obtain the MA value presented in table 5 below. Each position in the matrix may be obtained by corresponding operations, although these are not presented here for the sake of simplicity.

**Table 5**

| | | | | | | | | |
|---|---|---|---|---|---|---|---|---|
| | | | | | | | | |
| | | | | | | | | |
| | | | | | | | | |
| | | | | | | | | |
| | | | | | | | | |
| | | | 4,36 | | | | | |
| | | | | | | | | |
| | | | | | | | | |
| | | | | | | | | |
| | | | | | | | | |

Applying this approach to the MA values presented above in table 5, we obtain the va values (i.e., not subjected to the logarithmic operation presented in table 6 below. For the sake of simplicity, only values required for the ensuing operations are specified below.

**Table 6**

| | | | | | | | | |
|---|---|---|---|---|---|---|---|---|
| | | | | | | | | |
| | | | | | | | | |
| | | | | | | | | |
| | | | | | | | | |
| | | | 43,4 | 88,3 | 117,9 | | | |
| | | | 54,6 | 76,9 | 106,7 | | | |
| | | | 55,1 | 73,1 | 98,0 | | | |
| | | | | | | | | |
| | | | | | | | | |
| | | | | | | | | |

Obtaining the variation of deviations δva from the deviation va over a predetermined o*p sub matrix of the matrix, as represented by the operation as local variation dva:

$$\delta va = \sqrt{\left(\frac{\delta va}{\delta o}\right)^2 + \left(\frac{\delta va}{\delta p}\right)^2}$$

The size of the sub matrix may for example be a 3*3 matrix.

So, for the current example based on Table 6, we apply the spatial derivation matrix corresponding to the vertical rate of change (δva/δx) of luminance in the x direction,

| -1 | 0 | 1 |
|---|---|---|
| -1 | 0 | 1 |
| -1 | 0 | 1 |

X

| 43,4 | 88,3 | 117,9 |
|---|---|---|
| 54,6 | 76,9 | 106,7 |
| 55,1 | 73,1 | 98,0 |

=169,5

For the current example based on Table 6, we also apply the spatial derivation matrix corresponding to the horizontal rate of change (δva/δy) of luminance in the x direction,

| -1 | -1 | -1 |
|---|---|---|
| 0 | 0 | 0 |
| 1 | 1 | 1 |

X

| 43,4 | 88,3 | 117,9 |
|---|---|---|
| 54,6 | 76,9 | 106,7 |
| 55,1 | 73,1 | 98,0 |

=-23,4

Finally, dva=SQRT($169.5^2$+$23.4^2$)=171.1

$$dVA = \ln(dva+1) = 5.1$$

Obtaining the local variation with respect to the preceding position, dVA (i.e. as output for the preceding calculations when the matrix was centered on the immediately preceding position in the dataset) (dva) as represented by the operation:

$$dVA = Ln(\partial va + 1)$$

Applying this approach to the dva values presented above in table 6, we obtain the dVA value presented in table 7 below. Each position in the matrix may be obtained by corresponding operations, although these are not presented here for the sake of simplicity.

**Table 7**

| | | | | | | | | | |
|---|---|---|---|---|---|---|---|---|---|
| | | | | | | | | | |
| | | | | | | | | | |
| | | | | | | | | | |
| | | | | | | | | | |
| | | | | | | | | | |
| | | | | 5.1 | | | | | |
| | | | | | | | | | |
| | | | | | | | | | |
| | | | | | | | | | |
| | | | | | | | | | |

In the context of figure 2a, these calculations may be seen as being performed by units 40a, 40b, 40c and 40d for each output 12a, 12b, 12c, 12d respectively, so as to obtain a series of values of MA, VA and dVA (MA$_a$, VA$_a$, dVA$_a$; MA$_b$, VA$_b$, dVA$_b$; MA$_c$, VA$_c$, dVA$_c$...) for each position the respective working data set and for each working data set comprising either the input planar dataset or a respective reduced planar dataset, that is to say, at each resolution level output by module 30.

Figure 2b presents schematically functional elements of a system for encoding semantic content in an input planar data set in accordance with a further embodiment.

As shown in figure 2b, there are provided optional pre-processing module 20, down-sampling module 30 and processing module 40 substantially as described above. Figure 2b further presents additional features to those described with respect to figure 2. In particular, figure 2b presents further optional details of the processing module 40, as well as further downstream modules 60 and 70 as described further below. The variants, optional or preferred characteristics of the embodiment of figure 2a are equally applicable in the context of the embodiment of figure 2b and vice versa.

As shown, in processing module 40, the energy values output by each threshold unit 33a, 33b, 33c, 33d at each level of resolution are output to a respective processing subunit 41a, 41b, 41c, 41d, together with the orientation values, which performs the mathematical operations, described above with reference to figure 2a to obtain corresponding values of MA, VA and dVA as discussed above for each cell position at the corresponding level of resolution. As shown, the outputs MA, VA and dVA at each level are down sampled in correspondence to the down sampling performed by respective down sampling units 42a, 43a, 44a, 42b, 43b, 44b, 42c, 43c, 44c, 42d, 43d, 44d, in the corresponding level of the down sampling module 30, to obtain MA, VA and dVA values at the next level of down sampling.

The calculation of VA with reference to the specified region (e.g. as defined by the 7x7 circle as discussed above, may be determined step wise, with a three cell spacing in each axis, such that the outputs correspond to the position in the matrix at the next scale level. This has the advantage of requiring 9 times fewer calculations, and incorporates implicitly the decimation by a factor of three as implemented for example in the multiple scale embodiments of figures 2a or 2b. The calculation of dVA may then be performed at the next scale level with a 3x3 matrix and an incremental stepping of one cell.

As shown, the down-sampled values of MA, VA and dVA at each level, MAa, VAa and dVAa, MAb, VAb and dVAb, MAc, VAc and dVAc, MAd, VAd and dVAd, etc. These values are fed to selection module 60.

Each triplet of semantic output values MA, VA, dVA may be output with the Energy validation value EDa, EDb, EDc, EDd etc., or alternatively as shown the values MA, VA, dVA may be gated at the output on the basis of the Energy validation value EDa, EDb, EDc, EDd etc., such that only values of MA, VA, dVA corresponding to a pixel of sufficient intensity are output. Furthermore, since each layer operates on a different sized dataset, there is a possibility for a loss of synchronization between outputs for each level. To permit re-alignment, each triplet of semantic output values MA, VA, dVA may be output with an indication of the location of the corresponding cell in the respective dataset 12a, 12b, 12c, 12d etc.

As such there may be provided a further operation of deriving a semantic reference map retaining the mean angle value, the first derivate of the mean angle value and the second derivative of the mean angle value for each position in said working data set determined to correspond to a local maximum.

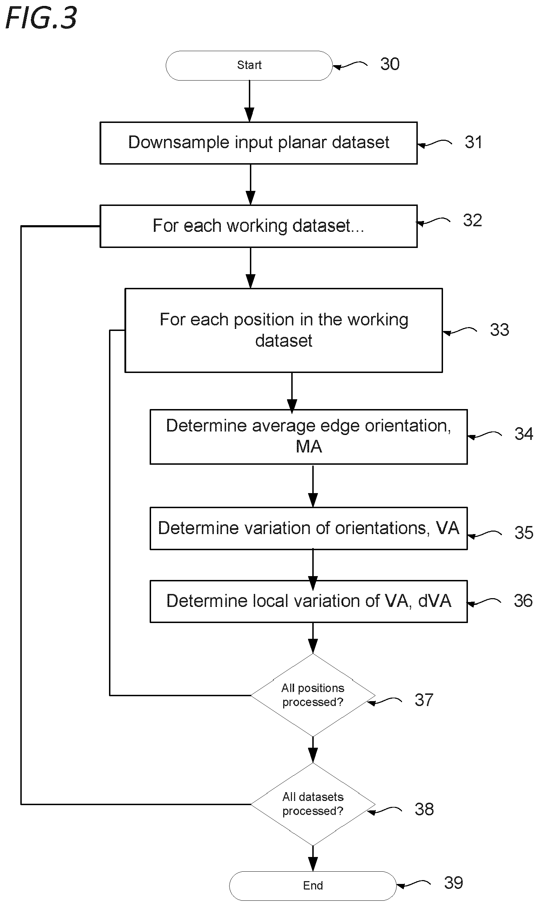

Figure 3 presents a method of encoding in accordance with an embodiment.

As shown in figure 3, in view of the preceding discussion, there is presented a method of encoding semantic content in an input planar data set. The input planar data set may define a plurality of cells in a plane, each said cell being defined in terms of an energy value and an orientation. As shown, the method starts at step 30 before proceeding to step 31 at which the input planar dataset is sampled to obtain a plurality of reduced planar datasets, said reduced planar datasets corresponding to successive reductions in scale by a predetermined factor.

For each working data set comprising either said input planar dataset or a said reduced planar dataset, the method may then proceed for each position in the respective working data set by calculating in a matrix approximating a circle having a diameter equal to twice said factor, plus one to determining, at step 33 the average of the edge orientation across said matrix weighted by the energy value of the position under consideration (MA), at step 34 the variation of the orientations across said matrix (VA), and at step 35 the local variation with respect to the preceding said position (dVA).

As shown, the method determines at step 37 whether all positions in the current dataset have been processed, and loops on step 33 until all positions have been processed.

As shown, the method determines at step 38 whether all datasets have been processed, and loops on step 32 until all datasets have been processed, and then terminates at step 39.

It will be appreciated that either or both of these looping operations may be replaced wholly or partially with a parallel processing of multiple datasets and or multiple positions in a dataset.

It will be appreciated that the method need not in fact terminate at step 39, but instead proceed to process a new data set, for example in the case of a video stream providing a continuous flow of images to process.

As will be understood from the preceding discussion, steps 33, 34 and 35 need not be performed in the specified sequence.

The method of figure 3 may be adapted to incorporate any of the variations presented herein, for example with respect to the exemplary systems of figures 2a or 2b.

As a result of the foregoing, a new data structure may be output, comprising a semantic representation of the original data. More particularly, a semantic representation of an image may be output. Such a representation may represent a compression of data, and/or provide an advantageous basis for further processing, for example as discussed further below.

In particular, there is provided a data structure for encoding semantic content from an input planar data set, said input planar data set defining a plurality of cells in a plane, each said cell being defined in terms of an energy value and an orientation, said data structure comprising, for each of a plurality of working data set comprising either said input planar dataset or a said reduced planar dataset, specifying for each position the respective working data:

○ the average of the edge orientation across said matrix weighted by the energy value of the position under consideration (MA),
○ the variation of the orientations across said matrix (VA),
○ the local variation with respect to the preceding said position (dVA).

As such, the preceding description provides one example of a mechanism for encoding semantic content in an intermediate planar data set defining a first plurality of intermediate cells, derived from an input planar dataset defining a second plurality of input cells, each said input cell being defined in of an energy value and an orientation, each said intermediate cell being defined in terms of:

○ a local average of the edge orientation across a predefined region of said intermediate planar data set as centred on each said input cell respectively, weighted by a local main angle value of the centre position under consideration (MA),
○ a variation of the local main angle value across said predefined region (VA);
○ a variation of the local VA value across said predefined region (dVA).

-X-

The skilled person will recognize that there exist other possible implementation mechanisms capable of providing a first plurality of intermediate cells, derived from an input planar dataset defining a second plurality of input cells, each said input cell being defined in of an energy value and an orientation, each said intermediate cell being defined in terms of:

◦ a local average of the edge orientation across a predefined region of said intermediate planar data set as centred on each said input cell respectively, weighted by a local main angle value of the centre position under consideration (MA),
◦ a variation of the local main angle value across said predefined region (VA). For example, aspects of a suitable approach might be developed based on the approach of the Discrete Cosine Transform operation (DCT) as implemented in the JPEG2000 standard, or compression by wavelet functions.

The triplet of values MA, VA, dVA as obtained for example by the preceding process constitute a covariant signature of a region covered by the region processed to obtain these values, e.g. the matrix approximating a circle having a diameter equal to twice said factor, plus one.

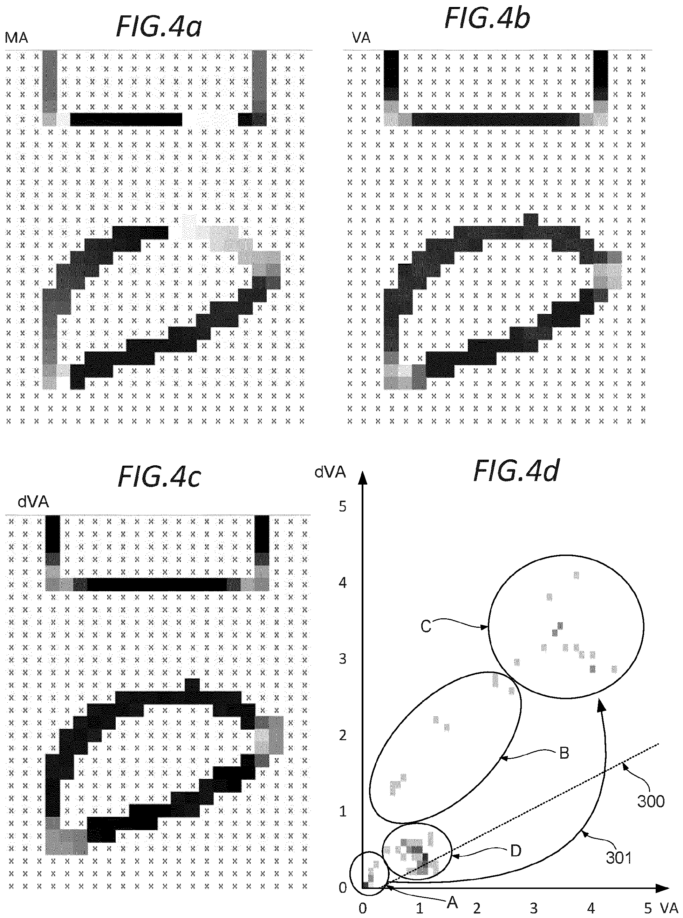

Figure 4a presents an exemplary set of values of MA as extracted from an input data set.

As shown, the MA value of each pixel, which may be calculated as described for example with respect to figures 2a and/or 2b and/or 3 above, is represented by a grey scale with darker values representing a value closer to 0°, and lighter values representing a value closer to 180°. An X indicates that a particular pixel has been set to a null value as described herein.

Figure 4b presents an exemplary set of values of VA as extracted from the same input data set as figure 4a.

As shown, the VA value of each pixel, which may be calculated as described for example with respect to figures 2a and/or 2b and/or 3 above, is represented by a grey scale with darker values representing a value closer to 0, and lighter values representing a value closer to 5.2. An X indicates that a particular pixel has been set to a null value as described herein.

Figure 4c presents an exemplary set of values of dVA as extracted from the same input data set as figure 4a.

As shown, the dVA value of each pixel, which may be calculated as described for example with respect to figures 2a and/or 2b and /or 3 above, is represented by a grey scale with darker values representing a value closer to 0, and lighter values representing a value closer to 5.2. An X indicates that a particular pixel has been set to a null value as described herein.

It may be imagined that in the case of common geometric forms, certain groupings of values may be expected.

Figure 4d presents a histogram of VA and dVA value combinations, as extracted by way of example from the data presented in figures 4b and 4c.

As shown, the pair of VA-dVA values e.g. as represented above is plotted, with the number of occurrences of each combination represented by a colour scale, with a darker colour indicating more occurrences.

As shown, a first grouping (region A) with very low values of both VA and dVA, may be isolated indicating a minimal curvature, and representing the beginning of a straight line.

Geometric forms in this sense may correspond for example to features discussed in the document "A language of thought for the mental representation of geometric shapes" by Mathias Sablé Meyer et al, or The language of geometry: Fast comprehension of geometrical primitives and rules in human adults and preschoolers" by Amalric et al, on 26 January 2017 in PLoS Comput Biol 13(1): e1005273. doi:10.1371/journal.pcbi.1005273

A second region (Region D) corresponding to a range of intermediate values of VA and commensurate intermediate values of dVA may be isolated representing sections of circles discernible within the region.

A third region (Region B) corresponding to high values of VA and commensurate high values of dVA may be isolated representing sections of tight circles discernible within the region, corresponding to angles e.g. between straight sections.

A fourth region (Region C) corresponding to very high values of VA and commensurate very high values of dVA may be isolated representing sections of a very tight circle discernible within the region, corresponding for example to a circle the size of single pixel in the region.

When a straight section (falling within region A) proceeds to an angle (falling within region B), a sequence of intermediate values where the value of VA initially increases slowly before quickly rising to a high value, so as to skirt region D.

If on the other hand when a straight section (falling within region A) proceeds to a curve, a sequence of intermediate values of successively greater, commensurate values of VA and dVA will occur so as to move smoothly into, and then through region D, e.g. as represented by the line 301.

On the basis of such a definition of characteristic regions in the VA-dVA histogram, each pixel in the original data set may be associated with one of the respective region types and/or the corresponding geometrical form. This classification may be used to determine the appropriate processing to extract those characteristic properties of that form in subsequent operations.

A reference line 300 separating these two characteristic paths may be envisaged. For example, a straight line representing a proportionality between dVA and VA, close to a proportionality of 0.7, and offset so as to fall to the positive dVA side may conveniently distinguish these two scenarios. Still further, a line defined by VA=0,7xVA-0,3 has been found to be effective.

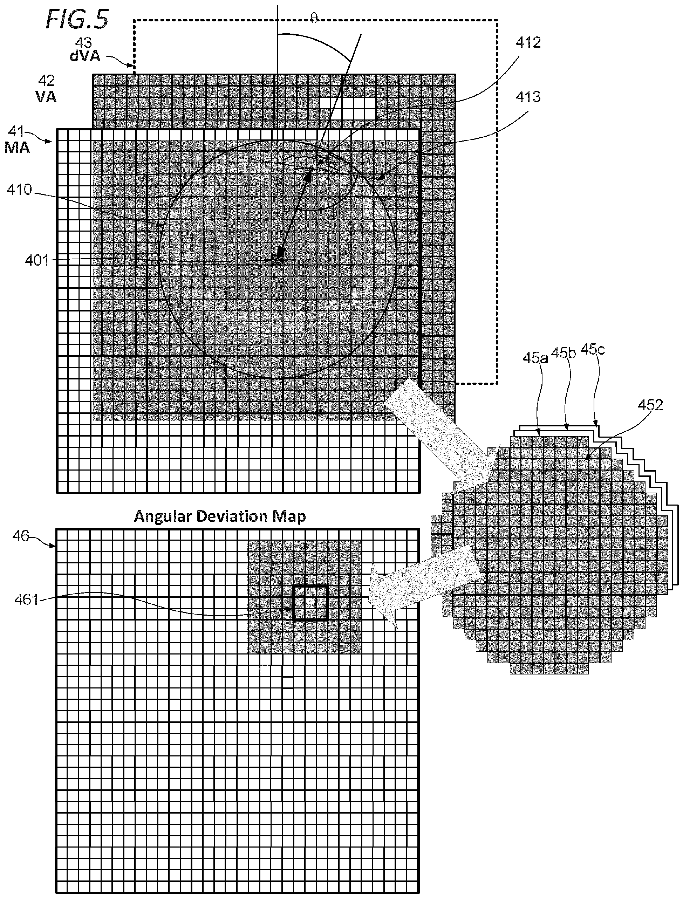

Figure 5 presents certain exemplary aspects of a mechanism for compiling a regional average angular deviation map in accordance with certain embodiments.

As shown in figure 5, the intermediate planar dataset comprises a plurality of intermediate cells, for example as described in the foregoing examples, each input cell being defined in terms of an energy value and an orientation. For each intermediate cell a local average of the edge orientation value (MA) and a variation of the local main angle value (VA) may be defined. Energy values (ED) may be included as a neutral value when a value of VA, dVA, and/or MA is deemed not valid as described above. As shown in figure 5, these sets of data may be represented as successive layers 41 (MA), 42 (VA), 43 (dVA).

For the purposes of the present explanation, the MA value for certain cells is represented graphically through the orientation of a line traversing the cell of concern. In particular, the line traversing cell 412, which will be referred to the in the following discussion, is extended outside the cell in question with dotted line 413.

The regional average angular deviation map is compiled from this data (that is, elements 41 and 42), by considering for each cell of the intermediate dataset the MA values of a respective region of the intermediate dataset.

This region 410 comprises an anchor cell 411 corresponding to the intermediate cell currently under consideration, and a plurality of region cells adjacent the anchor cell.

In particular, as shown the region may correspond to a cellular approximation of a circle, centred on the anchor cell, corresponding to the intermediate cell currently under consideration.

Advantageously, as shown the region may correspond to a cellular approximation of a circle, centred on the anchor cell, corresponding to the intermediate cell currently under consideration, where the radius of the circle is 10 cells, giving a total diameter of 21 cells. In certain embodiments, it may be desirable to detect linear features that are too large to be handled at the present scale, and need to be processed at a superior scale with a linear feature size under 21 cells, for example in the case of embodiments based on the approach of figures 2a and/or 2b and/or 3, where a single set of input values are processed at different scales. In such scenarios, it may be desirable to detect the presence of a linear feature exceeding the zone defined by the 21 pixel circle, by assessing the values in a circumferential ring. On this basis, the values of a ring, one pixel wide, around the external 21 cells diameter is assessed, and where the values indicate a feature extending beyond the circle currently under consideration, the evaluation of the cell currently under consideration is discarded.

## Angular deviation of edge orientation

This operation of considering may comprise, for each region, determining for each region cell an angular deviation $\varphi$ between the local average of edge orientation, MA, for the region cell in question, and the angle of a radius between said region cell and said anchor cell.

The angular deviation $\varphi$ corresponds to the modulus of the difference between the orientation of the angle $\theta$ of the radius between the region cell (for example, region cell 412) and the anchor cell (in the current example, 401).

For each region cell in the region currently under consideration an angular deviation $\varphi$ is so obtained. For each angular deviation $\varphi$ in the current region, it is determined whether the value is within a predetermined angular margin of 90°, that is to say, whether the MA is approximately perpendicular to $\theta$. By way of example, if the angular deviation value is within a predetermined angular margin of 90° this may be taken as an indicator that the cell in question is deemed likely to belong to an arcuate linear feature.

The predetermined angular margin, that is, how close the angular deviation must be to perpendicular for the cell to be selected, may be determined as a function of the characteristics of the intermediate planar data set.

This angular deviation value may be fixed on the basis of the calculation Atan($1/\rho$), which will give 45° for example for p=1, i.e. for a cell adjacent the anchor cell, or 5.7° for $\rho$=10.

The angular deviation $\varphi$ value of all region cells meeting this criterion is retained for the calculation of a regional average angular deviation for the region under consideration. This may be represented schematically as shown in figure 5 by the set of values 45, comprising a position corresponding to each region cell, where a value appears in the position 452 corresponding to region cell 412. Assuming for the sake of discussion that the angular deviation between the value of MA of cell 412 and the axis connecting region cell 412 and anchor cell 411 is 100°, a value of 100° is recorded for position 452. Region cells not meeting the selection criteria may be left blank. The regional average angular deviation is equal to the average of the angular deviation $\varphi$ values of all region cells meeting the selection criterion as defined above, that is, the average of all non-zero cells of value set 45a. This average value may then be written to the regional average angular deviation map 46, to the position corresponding to the intermediate cell currently under consideration, corresponding to the anchor cell 411 of region 410, that is, position 461.

The regional average angular deviation map 461 may then be parsed to identify one or more cells corresponding to a local minimum, for example as represented by the 3x3 matrix 461. This local minimum may be deemed to correspond to the centre of a linear feature defined by the selected region cells contributing to the regional average angular deviation of the intermediate cell corresponding to a local minimum.

It will be appreciated that in some cases, multiple, and in particular adjacent cells in the regional average angular deviation map 461 may equally correspond to a local minimum. In order to choose between such competing candidates, in certain variants, there may be performed a further step of determining for each region the number of selected region cells retained for the determination of the regional average angular deviation. On this basis, at the step of identifying an intermediate cell corresponding to a local minimum within the regional average angular deviation map as defining the centre of a linear feature, the intermediate cell having the largest number of selected region cells retained for the determination of said regional average angular deviation may be selected from a plurality of said intermediate cells corresponding to an identical local minimum is selected.

On this basis, multiple sets of values 45a, 45b, 45c etc. may be generated, insofar as multiple positions of the region 410 (as centred on different intermediate cells), include cells satisfying the selection criteria as discussed above. Nevertheless, it may be expected that there will be fewer sets of values than positions in the intermediate data set, since not all regions will include cells meeting the selection criteria.

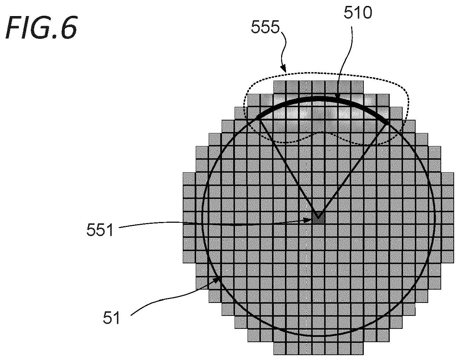

Figure 6 presents a linear feature identified as a result of the mechanisms described with respect to figure 5.

On the basis of the example of figure 5 a set of pixels satisfying the selection criteria for the region 410 as centred on the local minimum of the regional average angular deviation map 461 corresponding to the set of values 45a is obtained, which is known to include an linear feature in view of the selection of positions 555 based on criteria as discussed above, and the centre of the feature is considered to correspond to the centre of the region, 551. In particular, the linear feature may be considered to comprise an arcuate linear feature 510, being a portion of a circle 51.

As such, while the same or similar sets of selected pixels may have been selected for a number of sets of values 45a, 45b, 45c etc., only one of these will be chosen as corresponding to the centre of the feature in question.

Meanwhile, while only one linear feature has been discussed with respect to figure 5, it may be noted that the overall shape described in the MA values illustrated corresponds to an ovoid. This form may be approximated as a set of four arcs, of which that defined in figure 6 corresponds to the upper quadrant. An additional three sets of values, similar to that of figure 6 may be defined.

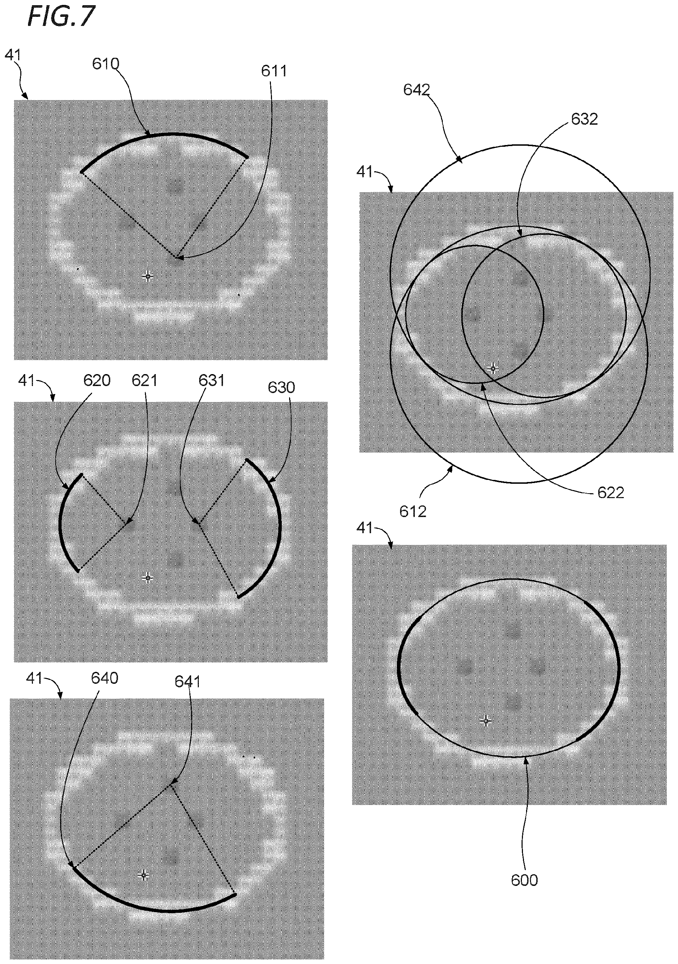

Figure 7 presents a representation of the semantic content of the data of figure 6 in terms of a plurality of linear features.

As shown in figure 7, the exemplary MA layer values represented in the plurality of intermediate cells 41 are reproduced.

In one reproduction of the exemplary MA layer values represented in the plurality of intermediate cells 41, an ovoid 600 is presented corresponding to the MA values.

As shown, this ovoid 600 comprises a first arc 610, with first corresponding centre 611, a second arc 620, with second corresponding centre 621, a third arc 630, with third corresponding centre 631, and a fourth arc 640, with first corresponding centre 641. Each arc is a portion of a respective circle 612, 622, 632, 642, centred on the respective centre position 611, 621, 631, 641.

By this means, any arbitrary content may be approximated.

It may be noted that a linear feature comprising an arc as identified in accordance with the foregoing process may conveniently be defined in geometrical terms.

As discussed with respect to figure 7, a plurality of linear features may be defined for a given intermediate planar data set.

In the case of figure 7, it may be noted that the separate linear features together make up a coherent form, which is susceptible of a higher degree of semantic abstraction. According to certain embodiments, there may be provided a further step of identifying intersections between a set of linear features, and defining a shape as corresponding to the set. As such, elements 610, 620, 630, 640 may be grouped as a single form.

The identification of intersections may be performed by identifying corresponding values in the respective sets of values defining each linear feature. Where a linear feature is already represented in geometric terms, suitable geometric tests will readily occur to the skilled person.

The extraction of the features of each linear feature may be performed, for example, by the following operations. With respect to each set of values 45a, 45b, 45c, selected as centred on a local minimum of the regional average angular deviation map 461 as discussed for example with reference to figure 5, the following steps may be performed:

Selecting the angular average value MA of the pixel at each extremity of the linear feature $MA_1$ at the start of the path, and $MA_2$ at the end of the path reflecting the exit direction of each extremity, such that the exit direction corresponds to a path along and away from the linear feature, so that that one value of MA will be unchanged, and the other will have 180° added (modulo 360°).

To isolate the intersection between two linear features, a cell having a value of MA perpendicular to the first angle θ exceeding a threshold may be used. For example a threshold of 22.5° has been found experimentally to give good results.

The difference of between the extremity angular average $MA_1$ at the start of the path, and the extremity angular average $MA_2$ at the end of the path, in the direction of the path $(MA_2-MA_1)$, may be calculated to obtain the opening angle of the corresponding linear feature.

The opening angle will be 180° for a straight line, and progressively decline for increasingly closed arcs, through 0° for a semi-circular arc, and down to -180° for a closed circle.

The average extremity angular average between the two extremity values $MA_2$ at the end of the path, in the direction of the path $(MA_2-MA_1)/2$ defines first angle $\theta_n$, reflecting a direction of the linear feature. This value may vary between 0 and 360° For arcuate linear features, a radius value r may be obtained.

This definition of the opening angle, first angle $\theta_n$, and radius r makes it possible to extract a definition in geometric terms, independent of the scale of the underlying pixel data.

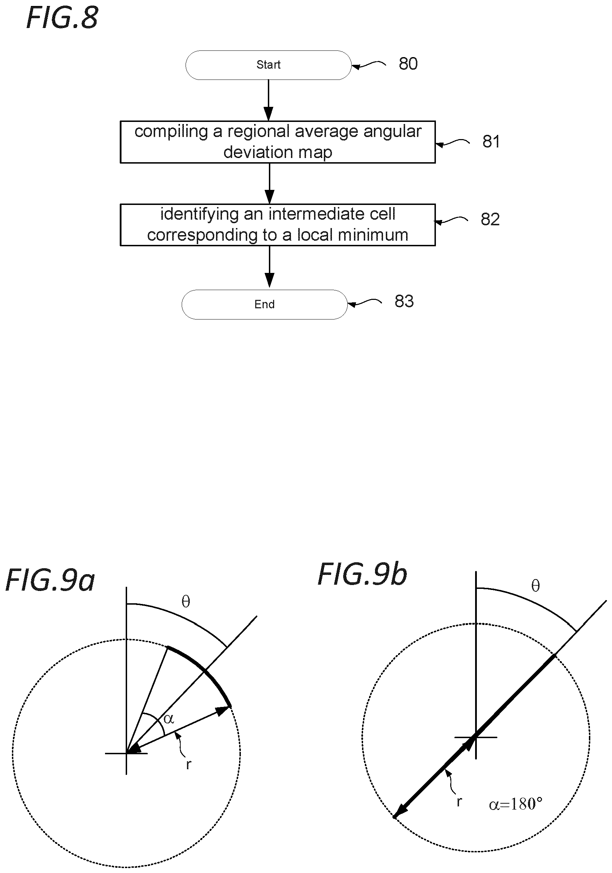

Figure 8 presents a method of encoding in accordance with an embodiment.

As shown in figure 8, in view of the preceding discussion, there is provided a method of encoding semantic content in an intermediate planar data set defining a first plurality of intermediate cells, derived from an input planar dataset defining a second plurality of input cells, each said input cell being defined in of an energy value and an orientation, each said intermediate cell being defined in terms of:

  ◦ a local average of the edge orientation across a predefined region of said intermediate planar data set as centered on each said input cell respectively, weighted by a local main angle value of the center position under consideration (MA),
  ◦ a variation of the local main angle value across said predefined region (VA);

As shown, the method starts at step 80 before proceeding to compile a regional average angular deviation map comprising a regional average angular deviation for each said intermediate cell and determining a regional average angular deviation for said respective intermediate cell from an average of said angular deviation of selected region cells whose angular deviation is within a predetermined angular margin of 90° of the regional average angular deviation at step 81, and then at step 82 proceeding to identify an intermediate cell corresponding to a local minimum within said a regional average angular deviation map as defining the center of a linear feature, said linear feature being defined by the selected region cells contributing to the regional average angular deviation of the intermediate cell corresponding to a local minimum.

The method then terminates at step 83.

It will be appreciated that the method need not in fact terminate at step 83, but instead proceed to process a new data set, for example in the case of a video stream providing a continuous flow of images to process.

The method of figure 8 may be adapted to incorporate any of the variations presented herein, for example with respect to the operations described with respect to figures 4 to 7.

The method of figure 8 may be seen in some embodiments as an extension of the method of figure 3, with the operations of figure 8 being performed on the data set generated by steps 31 to 38, although as discussed above, other mechanisms may be envisaged providing equivalent data.

As a result of the foregoing, a new data structure may be output, comprising a semantic representation of the original data. More particularly, a semantic representation of an image may be output. Such a representation may represent a further compression of data, and/or provide an additionally or alternatively advantageous basis for further processing, for example as discussed further below.

Figure 9a presents a geometrical representation of an arc in accordance with embodiments. Similar curves with different scales.

As shown in figure 9a, an arc may be defined in terms of a respective first distance, $r_n$, reflecting a radius of the arc with respect to the anchor cell, a respective first angle, $\theta_n$, reflecting a direction of the centre of said arc with respect to said anchor cell and an opening angle, $\alpha_n$, subtending said arc.

In line with the preceding discussion, the value of distance, $r_n$ may be defined as the average of the values of the radius p (as shown in figure 7) of each cell selected for the constitution of the linear feature (that is, incorporated in the respective set of values 45).

As discussed above, the selection criteria for inclusion in a dataset 45 include the determination whether the angular deviation value for the region cell under consideration is within a predetermined angular margin of 90°, that is to say, whether the MA is approximately perpendicular to θ.

In certain embodiments, additional criteria may be applied. In particular, an additional section criterion may then be defined for selecting cells having a variation of the local main angle value across said predefined region, VA (as specified in layer 42 as discussed above not exceeding a threshold value VA' by more than a predetermined margin. As discussed above, a margin of 0.4 in the units of VA corresponding to a curvature index, has been found to give good results for large circles, and tends towards 1 for small circles due to pixelisation artefacts.

Still further, the threshold value may vary in proportion to the length of said radius. Specifically, the Angular Variation threshold value VA' may be defined as inversely proportional to the distance of the region cell under consideration from the anchor cell.

That is to say,

$$vA' = \frac{k}{\rho}$$

Where p is the distance of the region cell under consideration from the anchor cell, and k is a constant. A particularly suitable value for k has been found experimentally to be between 8 and 10, and more particularly still, around 9.4.

It will be appreciated that rather than calculating the value of VA' on demand, it may be pre-calculated, or learned in an initialization phase, or otherwise defined at manufacture, in which case the values of VA' may be defined as reflecting a disc of values in a 21 cell diameter circle, from which VA' values may then be compared to the VA values in respective positions of a region 410, whereby a cell is retained for incorporation in the angular deviation map if the respective value of VA differs from the corresponding value of VA' by less than the threshold as discussed above, as well as meeting the other selection criteria.

As mentioned above, in certain embodiments each region may comprise said anchor cell corresponding to the respective intermediate cell, and adjacent cells falling within an 11 pixel radius of said anchor cell, so as to define a circular matrix of 23 pixels in diameter.

In the context of the preceding discussion, the radius $r_n$ may be stored in memory in a natural logarithmic form, whereby the diameters 1, 3, 7, 21 correspond approximately in logarithmic form to 0, 1, 2, 3, etc. i.e. $e^0=1$, $e^1=2.7$, $e^2=7.39$, $e^3=20.1$, etc.

As such, changing scale by a factor of three, as discussed with respect to figures 2a and/or 2b and/or 3 for example, corresponds to subtracting 1 from $\ln(r_n)$.

The value of VA'=k/p becomes very small for values of p>10, in particular where the next scale level $e^4 = 54.6$. It becomes unfeasible to distinguish between an arcuate linear feature and other groupings of values

The embodiments described above with respect to figures 7, and/or 8 and/or 9a may relate to linear features that may be defined in terms of an arc. While this may be used to reflect any linear feature, in certain embodiments it may be desirable to additionally distinguish linear features and straight lines.

In such cases, the mechanism described above may comprise an alternative set of selection criteria in addition to those described above for the selection of cells belonging to an arc. Specifically, the step of considering may further comprise determining a regional average angular deviation for the respective intermediate cell from an average of the angular deviation of selected region cells whose angular deviation is within a predetermined angular margin of 0°, that is to say, the MA value is parallel to θ.

An intermediate cell corresponding to a local minimum within said a regional average angular deviation map may then be identified defining the centre of a straight linear feature, said linear feature being defined by the selected region cells contributing to the regional average angular deviation of the intermediate cell corresponding to a local minimum, in the same way as discussed for an arcuate linear feature above.

It may be borne in mind that for a given region, certain region cells may satisfy the selection criteria for an arcuate linear feature, and others may satisfy the selection criteria for a straight linear feature, leading to the creation of multiple sets of values 45a, 45b, 45c... for respective features in the same region.

## Linear deviation of edge orientation

Accordingly, the operation of considering as discussed above may additionally comprise, for each region, determining for each region cell a parallel deviation φ between the local average of edge orientation, MA, for the region cell in question, and the angle of a radius between said region cell and said anchor cell.

The angular deviation φ corresponds to the modulus of the difference between the orientation of the angle θ of the radius between the region cell (for example, region cell 412) and the anchor cell (in the current example, 401).

The MA value at anchor cell is defined as MA_ref.

For each region cell in the region currently under consideration an angular deviation φ is so obtained. For each angular deviation φ in the current region, it is determined whether the value is within a predetermined angular margin of 0°, that is to say, whether the MA is approximately parallel to θ and MA is approximately equal to MA_ref. By way of example, if the angular deviation is within a predetermined angular margin of 0°, this is taken as an indicator that the cell in question is deemed likely to belong to a straight linear feature.

The predetermined angular margin, that is, how close the linear deviation must be to parallel for the cell to be selected, may be determined as a function of the characteristics of the intermediate planar data set.

The angular deviation $\varphi$ value of all region cells meeting this criterion is retained for the calculation of a regional average angular deviation for the region under consideration. This may be represented schematically as shown in figure 5 as discussed above by the set of values 45, comprising a position corresponding to each region cell, where a value appears in the position 452 corresponding to region cell 412. Assuming for the sake of discussion that the angular deviation between the value of MA of cell 412 and the axis connecting region cell 412 and anchor cell 401 is 100°, a value of 100° is recorded for position 452. Region cells not meeting the selection criteria may be left blank. The regional average angular deviation is equal to the average of the angular deviation $\varphi$ values of all region cells meeting the selection criterion as defined above, that is, the average of all non-zero cells of value set 45a. This average value may then be written to the regional average angular deviation map 46, to the position corresponding to the intermediate cell currently under consideration, corresponding to the anchor cell 411 of region 410, that is, position 461.

The regional average angular deviation map 461 may then be parsed to identify one or more cells corresponding to a local minimum, for example as represented by the 3x3 matrix 461. This local minimum may be deemed to correspond to the centre of a linear feature defined by the selected region cells contributing to the regional average angular deviation of the intermediate cell corresponding to a local minimum.

It will be appreciated that in some cases, multiple, and in particular adjacent cells in the regional average angular deviation map 461 may equally correspond to a local minimum. In order to choose between such competing candidates, in certain variants, there may be performed a further step of determining for each region the number of selected region cells retained for the determination of the regional average angular deviation. On this basis, at the step of identifying an intermediate cell corresponding to a local minimum within the regional average angular deviation map as defining the centre of a linear feature, the intermediate cell having the largest number of selected region cells retained for the determination of said regional average angular deviation may be selected from a plurality of said intermediate cells corresponding to an identical local minimum is selected.

In certain variants, additional selection criteria may be defined for the selection of cells belonging to straight linear features in addition to the MA value being parallel to $\theta$. For example, selected region cells whose angular deviation is within a predetermined angular margin of 0° may be further selected as additionally, having a variation of the local main angle value across said predefined region, VA not exceeding a threshold value. An angular margin of between 0.35 and of 0.45, and more particularly substantially equal to 0.4 has been found experimentally to give good results.

In a similar way to arcuate linear features, where a linear feature is determined to constitute a straight line, this may be represented by a geometrical definition of the straight line.

Figure 9b presents a geometrical representation of a straight line in accordance with embodiments.

In line with the preceding discussion, as shown in figure 9b, a straight line may be defined in terms of a respective first distance, $r_n$, reflecting half of the length of the straight line, consistent with the use of a radius to define an arcuate linear feature above, and a respective first angle, $\theta_n$, reflecting an orientation of the straight line (parallel with the average MA of the linear feature) with respect to the anchor cell. The opening angle, $\alpha_n$, of all linear features will be substantially equal to 180°.

It may be noted that, as discussed with respect to figure 7, a shape may be defined as the set of linear features. Although figure presents a shape comprising only arcuate linear features, in view of the discussion of figures 9a and 9b, it will be appreciated that such a set of linear features may comprise any combination of arcuate linear features and straight linear features, so as to define any arbitrary closed loop shape.

A given intermediate planar data set, or even a given region, may comprise a plurality of closed loops susceptible of definition as shapes, and all such sets of linear features defining a closed loop may be defined as respective shapes, whereby the semantic content of the intermediate planar data set may be fully defined as a set of such shapes.

In certain embodiments, such a shape comprising a set of linear features may be compiled by assessing the end points of a group of linear features, and associating as a particular shape those linear features whose end points coincide to a predetermined degree in space so as to form a continuous form. A given group of linear features may be dividable into multiple abutting forms, some of which may share one or more independent linear features. Path direction rules may be defined such that any group of linear features may be exhaustively explored, and all forms extracted. Path direction rules may include for example a requirement to proceed always in a particular direction (clockwise/anticlockwise).

As discussed above, a form which extends beyond the borders of the region under comparison, it may effectively be processed at a larger scale, for example in embodiments based on the approach of figures 2a and/or 2b and/or 3 etc., where a particular set of data is processed at multiple scales, as discussed further below.

At this stage, each form (or any set of linear features) may be defined in terms of a form file comprising, for each linear feature, the location of the centre of that linear feature (x,y) the radius of that linear feature (p), and the first angle and opening angle of that linear feature ($\theta$, $\alpha$).

Furthermore each form may be defined in terms of a form file comprising, for each linear feature, the location of the centre of that linear feature (x,y) the radius of that linear feature (p), and the first angle and opening angle of that linear feature ($\theta$, $\alpha$).

For a given form, a barycentre of all of the linear features may be determined, and the position of each linear feature belonging to the form defined relative to this barycentre. Advantageously, the relative position may defined in terms of polar coordinates R, $\varphi$.

Accordingly, each form may now be defined in terms of a form file comprising the code word, the barycentre of the form, and for each linear feature, the relative location of the centre of that linear feature (x,y) the radius of that linear feature (p), and the first angle and opening angle of that linear feature ($\theta$, $\alpha$).

It will be appreciated that different combinations of opening angle $\alpha$ and first angle (orientation) $\theta$ can be seen all possible circular arcs forms, once scale is disregarded.

By defining ranges of opening angle $\alpha$ and first angle (orientation) $\theta$, a family of reference circular arcs forms may be defined. The degree of granularity imposed by the size of the defined ranges may be selected so as to correspond to the resolution of the underlying pixel data.

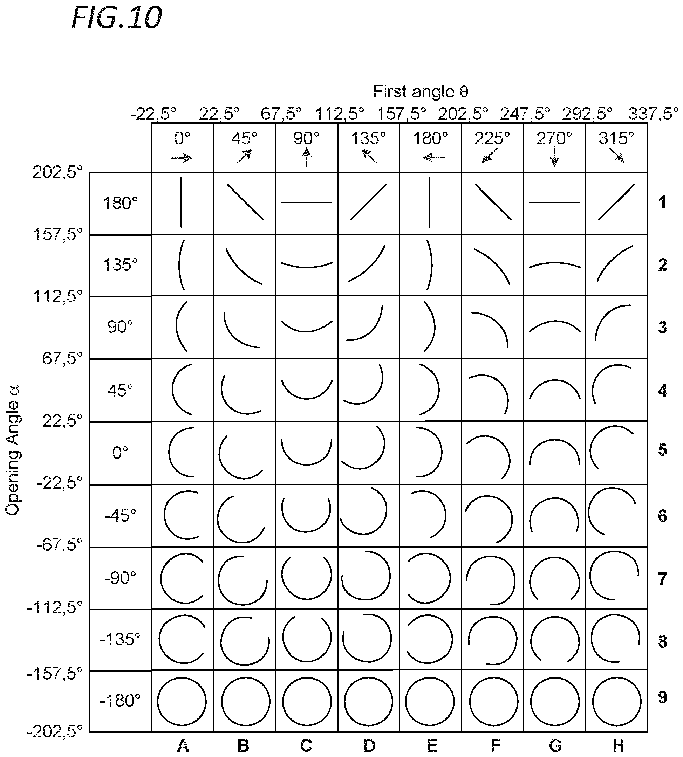

Figure 10 shows an example of a family of linear features.

As shown in figure 10, First angle (orientation) $\theta$ is plotted on an x axis between -22.5 and +337.5 degrees, against opening angle $\alpha$ on the y axis between +202.5 degrees and -202.5 degrees. 45 degree ranges are defined on each axis, defining a matrix with eight columns and nine rows. As shown, a representative linear feature is provided representing the linear feature corresponding to the central coordinate $\theta$ and $\alpha$ values of each cell. It may be noted that the values in the top row, corresponding to opening values between 157.5 and 202.5 degrees approximate straight lines, and that the values in the bottom row, corresponding to opening values between -157.5 and -202.5 degrees correspond to a closed circle, with the intervening rows provide progressively closed circular arcs. Each cell is provided with a reference code, which as shown comprises a letter from A to H specifying a column and a number from 1 to 9 specifying the row. By this means, any set of $\theta$ and $\alpha$ values obtained as a geometrical representation of a linear feature for example as described above may be converted to one of 65 code values (covering 64 differently oriented arcs and straight lines, and a closed circle (for which orientation has no meaning) . This represents a powerful compression of the extracted geometric data.

It will be appreciated that complex shapes may then be described in terms of a sequence of such codes. A number of relatively simple forms will now be discussed on this basis.

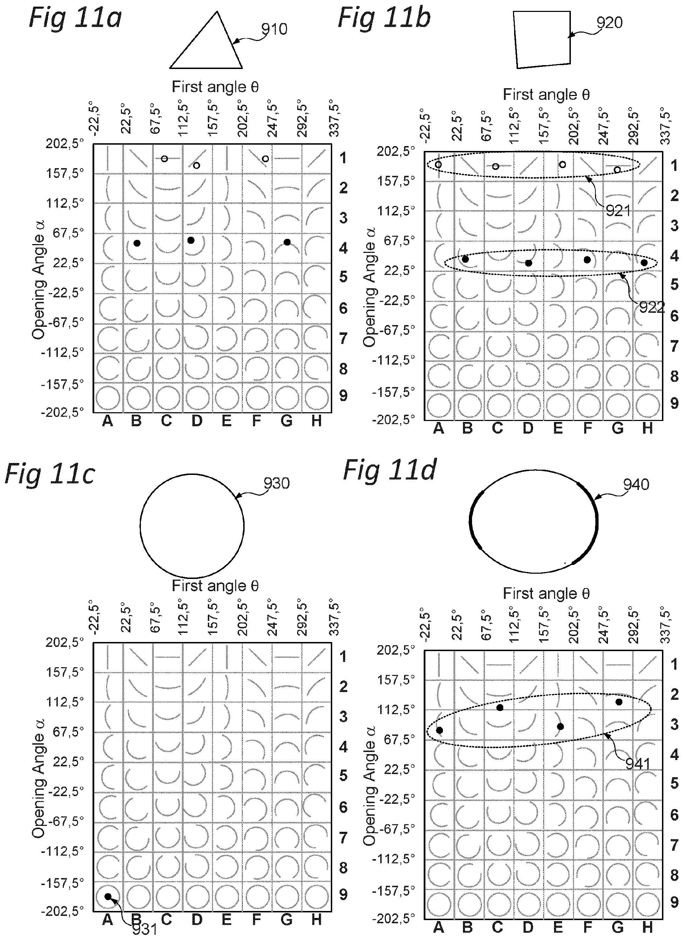

In accordance with certain embodiments, shapes may be grouped or classified on the basis of the characteristics of the set of linear features that constitute that shape, as a whole. To illustrate this principle, figures 11a, 11b, 11c and 11d plot, for each of the linear features constituting a given shape 910, 920, 930, 940 the values of the opening angle against the first angle, for that linear feature on a first set of Cartesian axes 91, and the values of the opening angle against the radius value, for that linear feature on a second set of Cartesian axes 92. In each case the first set of Cartesian axes plots opening angle on a scale of 0 to 180 degrees and the first angle on a scale of 0 to 360 degrees, and the second set of Cartesian axes plots opening angle on a scale of 0 to 180 degrees and the radius on an arbitrary (natural) logarithmic scale.

Figure 11a shows characteristic plots for a triangular shape.

As shown in figure 11a, a triangular shape 910 is presented comprising three arcuate linear features, at the three respective corners, and three straight linear features, comprising the straight sections joining the arcuate shapes. The points corresponding to the straight linear features are unfilled, while the points corresponding to the arcuate linear features are filled. Accordingly, a group 911 of three points corresponding to the arcuate linear features appears on the first set of axes 91. These points are grouped horizontally, indicating that they have very similar opening angle values of around 40 to 60 degrees, and distributed more or less evenly vertically. It will be appreciated that these values reflect the broadly equilateral (and therefore equi-angular) aspect of the triangle, and the fact that the three angles together describe a closed shape.

Additionally, a group 912 of three points corresponding to the straight linear features appears. These points are grouped horizontally, indicating that they have a substantially identical opening angle value of 180 degrees, as may be expected for a straight line, and distributed more or less evenly vertically, as required to join the three angles.

On this basis, the form 910 may be defined by the code C1-D1-F1-B4-D4-G4.

To provide a complete representation of a Form on this basis for certain purposes as discussed hereafter, elements obtained in previous processing steps may be retained. For example, in embodiments requiring the association of multiple forms in relative positions in space, the position of the barycentre of the Form XY may be retained in association with the code word.

The sequence of code values may reflect the sequence of the corresponding linear features when following the chaining. Alternatively, the linear features may be provided in a sequence dictated by their position in the two dimensional space, e.g. reading from left to right and top to bottom, or otherwise.

Figure 11b shows characteristic plots for an approximately square shape.

As shown in figure 11b, a square shape 920 is presented comprising four arcuate linear features, at the four respective corners, and four straight linear features, comprising the straight sections joining the arcuate shapes. The points corresponding to the straight linear features are unfilled, while the points corresponding to the arcuate linear features are filled. Accordingly, a group 921 of four points corresponding to the arcuate linear features appears. These points are grouped horizontally, indicating that they have very similar opening angle values of around 90 degrees, and distributed more or less evenly vertically. It will be appreciated that these values reflect the broadly equilateral (and therefore equi-angular) aspect of a square, and the fact that the four angles together describe a closed shape.

Additionally, a group 922 of four points corresponding to the straight linear features appears. These points are grouped horizontally, indicating that they have a substantially identical opening angle value of 180 degrees, as may be expected for a straight line, and distributed more or less evenly vertically, as required to join the four angles.

On this basis, the form 920 may be defined by the code A1-C1-E1-G1-B4-D4-F4-H4.

Figure 11c shows characteristic plots for a circular shape.

As will be appreciated from the forgoing discussion, a circle is the form susceptible of the simplest description. As shown in figure 11c, a circular shape 930 is presented comprising a single arcuate linear feature, corresponding to the circumference of the circle 930. Accordingly, a point 931 corresponding to the arcuate linear feature appears, situated at 180 degrees of opening angle, and zero degree of first angle.

On this basis, the form 930 may be defined by the code A9.

Figure 11d shows characteristic plots for an ovoid shape as described with reference to figure 7.

As shown in figure 11d, an ovoid shape 940 is presented comprising four arcuate linear features (as described with reference to figure 7), at four respective sides of the shape. Accordingly, a group 941 of four points corresponding to the arcuate linear features appears on the first set of axes 91. These points are grouped horizontally, indicating that they have very similar opening angle values of around 90 degrees, and distributed more or less evenly vertically.

On this basis, the form 940 may be defined by the code A3-C2-E3-G2.

In the light of these examples, it will be appreciated that taking these distributions of values together may be taken to constitute a "finger print" for the particular class of shape to which they relate.

It will be appreciated that various uses of data encoded in accordance with the forgoing embodiments may be envisaged. For example, a library of semantic descriptions may be envisaged. Such a library may comprise known combinations of semantic content (that is to say, particular sets of a local average of the edge orientation across a predefined region of said intermediate planar data set as centred on each said input cell respectively, weighted by a local main angle value of the centre position under consideration (MA), variation of the local main angle value across said predefined region (VA); and variation of the local VA value across said predefined region (dVA)). A particular such combination may be seen as a label, or an additional lay of abstraction associating a label code with a particular combination of such values may be envisaged, for example as described in certain examples set out below.

-X-

A preceding discussion provides a mechanism for obtaining a representation of a form in terms of one or more linear features defined in terms of an opening angle between 180° and -180° and a direction between 0 and 360°. It will be appreciated that other mechanisms may be envisaged producing such a representation. Indeed, such representations may be simply defined in this format ab initio.

In accordance with an embodiment there is provided a method of encoding a subject form comprising one or more linear features.

Each said linear feature being defined in terms of an opening angle and a direction between 0 and 360°, for example as described with reference to figure 9a or 9b.

In accordance with the method each linear feature is associated with one of a set of predefined contiguous, non-overlapping regions in a two dimensional space representing opening angle values in a first said dimension, and direction values in a second said dimension, where said set of ranges cover in aggregate the entirety of said two dimensional space, for example as described with reference to figure 11.

This step of associating may comprise a step of determining for each linear feature an alignment coefficient representing the distance of the position defined by the opening angle value and direction angle of said linear feature in said two dimensional space from the barycentre of each respective said region with which said linear feature is associated.

For example, an alignment coefficient may be calculated for each linear feature with respect to each said region in said two dimensional space. Taking for example the two dimensional space presented with reference to figure 11, we may consider the three dimensional space to comprise 8x9=72 regions, so that for each linear feature, 72 alignment coefficient values may be determined.

Values may be weighted to favour readings falling close to the centre of a region. A progressive weighting curve may be defines. Suitable curves may define a linear fall from the centre, or any suitable curve such as a square law, parabola, logarithmic curve and the like. In accordance with certain embodiments, the alignment coefficient CA may be calculated with a central weighting curve such as a bilinear Gaussian distribution. Still further, the alignment coefficient CA may be calculated on the basis of a Gaussian distribution. the, for example as defined by the following equation

$$CA = \frac{B}{2\pi\sqrt{V_{oa}.V_{bis}}} \cdot e^{\frac{-1}{2}\left[\frac{(OA - \mu_{OA})^2}{V_{oa}} + \frac{(A)^2}{V_{bis}}\right]}$$

So that a value falling in the centre of a region gives a CA of 1, the CA falling to zero as the values gets further from the centre.

Where

The first component of this calculation $\frac{B}{2\pi\sqrt{V_{oa}.V_{bis}}}$ is used solely during a learning phase, and thereafter may be set to one.

B is a normalization factor for the learning operation chosen such that CA falls within a desired range.

OA is the Opening Angle of the linear feature under consideration

Bis is the Direction of the linear feature under consideration

$\mu_{OA}$ is the centre of the region under consideration in the Opening Angle axis,

$\mu_{bis}$ is the centre of the region under consideration in the Direction axis,

$V_{OA}$ is the variance of the value of the Opening Angle with respect to the barycentre $\mu$ of the region under consideration.

$V_{bis}$ is the variance of the value of the First Angle with respect to the barycentre $\mu$ of the region under consideration.

As such, this calculation assumes a rectangular region. The skilled person will recognize that this general approach may be adapted for regions of other shapes.

A is an adaptation coefficient = 360-abs | Bis-$\mu_{bis}$ | if abs | Bis-$\mu_{bis}$ | >180°, or abs | Bis-$\mu_{bis}$ | otherwise.

This adaptation coefficient is defined as a function of the range of variation of the variance of the Gaussian distribution. With a variance of 365, the Coefficient B is equal to 2x3, 14x365, so A=2292, when $V_{OA}$=365 and $V_{bis}$ =365

The values of $V_{OA}$=365 and $V_{bis}$ =365 presented here reflect the variance of training data used during a learning phase, and as such may vary depending on the characteristics of the data used, having been selected such that CA values during the training phase converge to an average of 50%.

It will be appreciated that although it is to be expected that for like forms a certain degree of variation in the exact placement of the component linear features may be expected, it is unlikely that any of these component linear features will be in a distant region of the two dimensional space. On this basis, it is reasonable to limit the regions for which the alignment coefficient is calculated to nearby regions. For example, the regions for which the alignment coefficient is calculated may be limited to whichever region the linear feature falls into, and all adjacent regions. Similarly, the regions for which the alignment coefficient is calculated may be limited to all regions at least partially falling within a predetermined radius of the position of the linear feature. Similarly, the regions for which the alignment coefficient is calculated may be limited to all regions whose barycentre falls within a predetermined radius of the position of the linear feature. Additionally or alternatively, alignment coefficients calculated for regions falling below a certain threshold may be calculated, and then discarded.

For the sake of the present example, the regional distribution of figure 10 is retained, and an alignment coefficient calculated for the region in which each linear feature falls, and each adjacent region, so that generally nine alignment coefficients will be calculated for each linear feature.

On the basis of the example of figure 10, the regions may defined as rectangular regions in said two dimensional space, corresponding to the intersection of a respective predefined range of opening angle values in said first dimension of said two dimensional space, and a respective predefined range of direction values in said second dimension of said two dimensional space. It will nevertheless be appreciated that regions of any regular tessellating shape may be defined, or still further any arbitrary combination of interlocking shapes, as discussed further below.

On the basis of the example of figure 10, the increment in opening angle between each successive predefined range of opening angle values in the first dimension of said two dimensional space may be equal to 45°. It will nevertheless be appreciated that any convenient increment may be selected based on the desired degree of granularity. Still further different increment may be selected from one range to the next, depending for example of the frequency of shapes falling into each range.

Considering the example of figure 11d, where the form 940 is composed of four linear features, this would lead to a representation of the form in terms of four sets of nine alignment coefficients. Considering the first (leftmost) point composing the form, it will be appreciated that only six alignment coefficients are required, since no adjacent regions are defined to the left of the column in which the first linear feature falls.

On this basis, each linear feature may be defined in terms of an opening angle between -180 and 180 degrees.

Each linear feature may be defined in terms of a direction between 0 and 360 degrees.

Each linear feature may be further defined by a radius value. As discussed above, forms are defined in terms of a two dimensional space representing opening angle values in a first said dimension, and direction values in a second said dimension. In certain embodiments, this two dimensional space may be seen as expanded to a third dimension, comprising a radius axis. Still further, in certain embodiments, a continuous series of discrete ranges may be defined along this radius axis. Still further, in certain embodiments, the set of predefined contiguous, non-overlapping regions may correspondingly comprise three dimensional regions in the three dimensional space representing opening angle values in a first said dimension, and direction values in a second said dimension and radius in the third dimension, where said set of ranges cover in aggregate the entirety of said three dimensional space.

Conveniently, each region may be associated with a reference code. On the basis of figure 11d, the reference code comprises a letter and a number defining a row and column in the matrix of regions, although any suitable coding system may be used.

The specified format in which subject forms (and correspondingly candidate forms etc.) are defined may reflect the sequence of interconnected linear features in a predefined direction of travel. For example, with reference to the example of figure 11d, a sequence may specify starting with the linear feature having the highest direction angle, and then following the interconnected linear features clockwise.

Alternatively, regions may be assigned a position in a region sequence, whereby the specified format reflects the interconnected linear features in the order of the position of the region in said region sequence with which each respected linear feature is associated. For example, a region sequence starting at the centre of the two dimensional space and spiralling outward may be defined.

It will be appreciated that many other suitable mechanisms may be envisaged. The definition of a standard sequence may facilitate the comparison of the (or each) subject form with the forms in the reference form set as described below.

On this basis, the first linear feature might produce the following set of alignment coefficients:

A2:0.6
B2:0.85
A3:0.1
B3:0.55
A4:0.4
B4:0.75

Similarly, with respect to the second linear feature, we might obtain

B1:0.9
C1:0.7
D1:0.9
B2:0.6
C2:0.2
D2:0.6
B3:0.7
C3:0.3
D3:0.7

Similarly, with respect to the third linear feature, we might obtain

D2:0.7
E2:0.5
F2:0.7

D3:0.5
E3:0
F3:0.5
D4:0.7
E4:0
F4:0.7

Similarly, with respect to the fourth linear feature, we might obtain

F1:0.9
G1:6.5
H1:0.9
F2:5.5
G2:0.15
H2:0.55
F3:0.75
G3:0.4
H3:0.75

On the basis of these determinations, we may define one or more subject forms built from these possible associations of regions and their accompanying coefficients. For example, the values set out above provide 6x9x9x9=4374 possible subject forms.

|  | Linear Feature 1 | Linear Feature 2 | Linear Feature 3 | Linear Feature 4 |
|---|---|---|---|---|
| Combination 1 | A2:0.6 | B1:0.9 | D2:0.7 | F1:0.9 |
| Combination 2 | A2: 0.6 | B1: 0.9 | D2: 0.7 | G1:0.65 |
| Combination 3 | A2: 0.6 | B1: 0.9 | E2:1 | F1: 0.9 |
| .... | .... | .... | .... | .... |
| Combination 4373 | B4:0.75 | D3:0.7 | F4: 0.7 | G3:0.4 |
| Combination 4374 | B4: 0.75 | D3: 0.7 | F4: 0.7 | H3: 0.75 |

Meanwhile, a set of candidate forms may be provided from a reference form set, for example in a stored library of forms. Each candidate form is defined in a specified format in terms of a set of one or more regions (that is, the same regions as referenced by the subject forms). On this basis, a further step of determining to what extent the candidate form corresponds to the (or any) subject form.

In certain embodiments, every form defined in the reference form set may be tested as a candidate form. In other embodiments, a subset of the reference form set may be preselected for testing as candidate forms. This pre-selection may comprise preselecting all forms in the reference form set having a predetermined number of regions in common with the (or any) subject form. Further selection criteria may be retained instead of or as well as this approach, including additional criteria as discussed further below.

In a case where it is determined that no candidate form corresponds to the (or any) subject form to a predetermined extent (e.g. meeting a similarity threshold), the new subject form (as defined by the regions in which each form falls naturally) may be added to the reference form set. This represents a learning mode of the described approach. In a mature system it may be rare or even unknown for a new form to be discovered, so that this learning operation may be disregarded. In other contexts, continuous learning may be expected. A special case may be where the system starts with an empty library of forms, so that initially every form is found to be new and added to the memory.

Conveniently where the reference form set comprises a library of forms stored in a memory, the subject form may be added to the reference form set with a serial number incremented with respect to the next highest serial number by one, so that the library of forms comprises a series of consecutively numbered forms.

Meanwhile, it may be determined which candidate form corresponds most closely to the (or any) subject form. In this case (and where any similarity threshold as discussed above is met) the subject form may be classified as an instance of the candidate form corresponding most closely to the subject form.

The determination of which candidate form corresponds most closely to the (or any) subject form may comprise calculating a matching value corresponding to the mean alignment coefficient of each range constituting the target form under consideration correspondingly defined in a respective candidate form, across the regions specified by that respective candidate form, where the candidate form having the highest matching value is deemed to correspond most closely to said subject form.

Each candidate form may be conveniently represented by a code word concatenating the reference codes for the regions it comprises.

So, for example, to compare the first subject form listed above:

| A2:0.6 | B1:0.9 | D2:0.7 | F1:0.9 |
|--------|--------|--------|--------|

With a first candidate form

| A2 | B1 | D2 | F1 |
|----|----|----|----|

The matching value would be (0.6+0.9+0.7+0.9)/4=0.775

For a second candidate form:

| A2 | B1 | D2 | F1 | G6 |
|----|----|----|----|----|

The matching value would be (0.6+0.9+0.7+0.9)/5=0.62

An average of 1 will indicate a perfect match, falling to zero as the degree of similarity falls.

According to certain embodiments, there may be provided an further step of optimizing the matching between a subject form and a candidate form with reference to radius values- each region reference code defining a given candidate form may be associated with a radius value (from the learning phase), and each region reference code defining the subject form is also associated with a radius value, e,g, as obtained per the discussion of figures 6 to 9 for example.

So, for example, when comparing the first subject form as shown below

| Reference | A2 | B1 | D2 | F1 |
|-----------|----|----|----|----|
| radius | 2 | 3 | 2 | 3 |

With a first candidate form as follows,

| Reference | A2 | B1 | D2 | F1 |
|-----------|----|----|----|----|
| radius | 3 | 2 | 3 | 2 |

The radius values may be compared by respective pairs of region reference code between the candidate form and the subject form, and in a case where it is found that an alternative sequence of the reference codes would give a better matching of radius values, this alternative sequence is adopted. This makes it possible to match for example a subject form rectangle in a portrait arrangement with an identical candidate form rectangle in a landscape arrangement for example.

It is apparent that there is a misalignment between the radius values, suggesting in the case of figure 11d that while the subject form describes an ovoid with its major axis aligned horizontally, the candidate form is more likely to represent a form with a vertical major axis. On this basis, the candidate form may be rotated by processing the sequence of forms in the defined sequence to achieve an optimum alignment. Alternatively, the subject form may be modified instead for the purposes of the current comparison.

Realigned candidate form:

| Reference | F1 | A2 | B1 | D2 |
|-----------|----|----|----|----|
| radius | 2 | 3 | 2 | 3 |

Similarly, if all radius values in a subject form correspond to the corresponding radius values of a candidate form subject to a common scaling factor, the radius values of the subject form can be adjusted by this scaling factor to better match the candidate form. This makes it possible to match for example a subject form that is identical to, but smaller than, or larger than, the reference form.

So, for example, when comparing the first subject form as shown below

| Reference | A2 | B1 | D2 | F1 |
|-----------|----|----|----|----|
| radius | 2 | 3 | 2 | 3 |

With a first candidate form as follows,

| Reference | A2 | B1 | D2 | F1 |
|-----------|----|----|----|----|
| radius | 4 | 6 | 4 | 6 |

The radius values may be compared by respective pairs of region reference code between the candidate form and the subject form. It is apparent that in each case the radius value of each linear feature of the candidate form is twice that of the corresponding linear feature of the subject form. To achieve an optimum mapping, the radius values of the candidate form may be multiplied by the detected scaling factor achieve an optimum alignment. Alternatively, the subject form may be modified instead for the purposes of the current comparison.

Either or both of these operations may be performed on the same subject form-candidate form mapping.

In order to minimize the size of the library of forms, it is desirable to increase the degree of invariance with respect to factors of symmetry, rotation and scale, such that a given input form may be recognized as matching a corresponding form in the library of forms regardless of these considerations.

In order to achieve this, an input form may be subjected to a number of transformations, to obtain a set of transformed input forms, each of which may be compared to the candidate forms, and the best match selected, as described above.

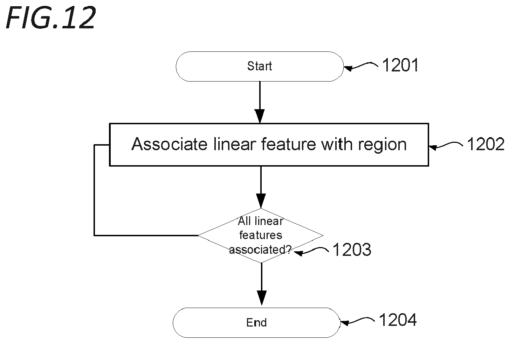

Figure 12 presents a method of encoding in accordance with an embodiment.

As shown in figure 12, in view of the preceding discussion, there is provided a method of encoding a subject form comprising one or more linear features, each said linear feature being defined in terms of an opening angle between 180° and -180° and a direction between 0 and 360°. As shown, the method starts at step 1201 before proceeding to step 1202 at which each linear feature is associated with one of a set of predefined contiguous, non-overlapping regions in a two dimensional space representing opening angle values in a first said dimension, and direction values in a second said dimension, where said set of ranges cover in aggregate the entirety of said two dimensional space, e.g. as described with reference to figures 10, 11a, 11b, 11c, 11d etc.

As shown, the method determines at step 1203 whether all detected linear features have been associated with a region, and loops on step 1202 until all detected linear features have been associated with a region, and then terminates at step 1203.

It will be appreciated that the method need not in fact terminate at step 1203, but instead proceed to process a new data set, for example in the case of a video stream providing a continuous flow of images to process.

The method of figure 12 may be adapted to incorporate any of the variations presented herein, for example with respect to the operations described with respect to figures 10, 11a, 11b, 11c, 11d, or 13 to 16 below.

The method of figure 12 may be seen in some embodiments as an extension of the method of figure 8, with the operations of figure 12 being performed on the data set generated by steps 81 to 82, although as discussed above, other mechanisms may be envisaged providing equivalent data.

As a result of the foregoing, a new data structure may be output, comprising a semantic representation of the original data. More particularly, a semantic representation of an image may be output. Such a representation may represent a still further compression of data, and/or provide an additionally or alternatively advantageous basis for further processing, for example as discussed further below.

In particular, there is provided a data structure for encoding a subject form comprising one or more linear features, each said linear feature being defined in terms of an opening angle between 180° and -180° and a direction between 0 and 360°, said data structure defining each said linear feature with reference one of a set of predefined contiguous, non-overlapping regions in a two dimensional space representing opening angle values in a first said dimension, and direction values in a second said dimension, where said set of ranges cover in aggregate the entirety of said two dimensional space.

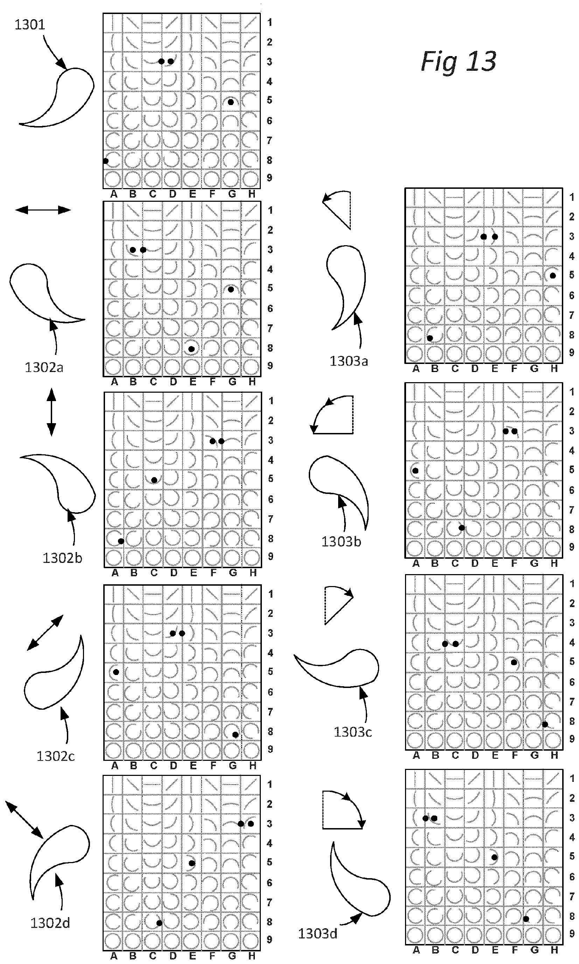

Figure 13 presents examples of transformations that may be implemented on the basis of the representation discussed with reference to figures 10 to 12.

As shown in figure 13, an input form 1301 is obtained as described above. In accordance with the principles described previously, this form may be defined by the form code word G5:D3:A8:D3 (The linear feature A8 corresponding to the sharp angle between the two lower arcs). In the present example, a first set of transformations comprising a reflection through a horizontal axis to give transformed subject form 1302a, a vertical axis to give transformed subject form 1302b, an axis inclined 45 degrees to the right to give transformed subject form 1302c and an axis inclined 45 degrees to the left to give transformed subject form 1302d, and a second set of transformations comprising a rotation 45 degrees to the left (anticlockwise) to give transformed subject form 1303a, a rotation 90 degrees to the left(anticlockwise) to give transformed subject form 1303b, a rotation 45 degrees to the right (clockwise) to give transformed subject form 1303c, and a rotation 90 degrees to the right (clockwise) to give transformed subject form 1303d.

On this basis, the original subject form G5:D3:A8:D3 is transformed to a new form as set out in the examples below.

It may be observed with respect to the examples of figure 13 that in view of the characteristics of the two dimensional representation of linear features the various transformations are achieved by an appropriate offset of the first angle ($\theta$) as plotted on the vertical axis as shown. This provides the basis for a straightforward automatic generation of the transformed subject forms as set out below.

| Transformation | Operation | Result in example |
|---|---|---|
| None(1301) | None | G5:D3:A8:D3 |
| Horizontal symmetry (1302a) | $\theta' = 360 - \theta$ | G5:B3:E8:B3 |
| Vertical Symmetry (1302b) | $0 \leq \theta \leq 180 : \theta' = 180 - \theta$ <br> $\theta > 180 : \theta' = 540 - \theta$ | C5:F3:A8:F3 |
| Diagonal Symmetry 45° (1302c) | $90 < \theta < 360 : \theta' = 450 - \theta$ $\theta \leq 90 : \theta' = 90 - \theta$ | A5:D3:G8:D3 |
| Diagonal Symmetry 135° (1302d) | $315 \leq \theta < 360 : \theta' = 630 - \theta$ $0 \leq \theta < 315 : \theta' = 270 - \theta$ | E5:H3:C8:H3 |
| Rotation 45° Anticlockwise (1303a) | $\theta' = 45 * (Mod8(\theta) - 1)$ | H5:E3:B8:E3 |
| Rotation 90° Anticlockwise(1303b) | $\theta' = 45 * (Mod8(\theta) - 2)$ | A5:F3:C8:F3 |
| Rotation 45° Clockwise (1303c) | $\theta' = 45 * (Mod8(\theta) + 1)$ | F5:C3:H8:C3 |
| Rotation 90° Clockwise(1303d) | $\theta' = 45 * (Mod8(\theta) + 2)$ | C5:F3:A8:F3 |

It will be appreciated that in some implementations it may be convenient to determine every transformation value for every linear feature, and then output such transformed forms as required.

Each candidate form has an average radius. This is compared with the average radius of the input form

On this basis, it can be seen that while a subject form may well be compared to candidate forms having more or fewer linear features, but this will typically imply a compromised matching value, making the final selection of such candidate forms uncommon.

While in the preceding discussion, each form in the reference form set may be defined solely by the regions it incorporates, possibly with a serial number or other identifier, in accordance with certain embodiments, each form in the reference form set may be enriched with additional information. This additional information may support the optimized selection of candidate forms.

For example, in certain embodiments, each form in the reference form set candidate, and accordingly each candidate form may be associated with metadata reflecting the average of the opening angle of the linear features constituting that candidate form and the variance of the opening angle of the linear features constituting that candidate form.

It will be appreciated that this metadata may conveniently serve to characterize certain common regular forms. For example, all squares, rectangles, parallelograms and lozenges will have an average opening angle of 90°, while the variance of the opening angle describes the symmetries of each form respectively. Similarly, all triangles have an average opening angle of 60°, etc. In certain embodiments, each form in the library of forms, and hence each candidate form may be associated with metadata reflecting the average of the opening angle of the linear features constituting that candidate form and the variance of the opening angle of the linear features constituting that candidate form. Additionally or alternatively, labels may be defined corresponding to particular groupings of values may be applied to one or more corresponding forms in the library of forms. For example, an average opening angle of 90° indicates that the form is a regular quadrilateral, and may be labels or classified as such. An average opening angle of 180 degrees corresponds to the straight sections present in a form. For each class found, the dispersion or variation may be calculated, which may form the basis of a sub category, e,g, with squares and trapezoids as respective subcategories of the quadrilateral category. Similarly, the radius $\rho$ can be used in a similar way, supporting the differentiation between a rectangle and a square, or corresponding forms at different scales.

The step of determining which said candidate form corresponds most closely to the subject form may then comprise a further step of preselecting said candidate forms from a reference form set on the basis of a correspondence between the average of the opening angle of the linear features constituting the subject form and the variance of the opening angle of the linear features constituting the subject form and said metadata for each reference form in said reference form set, or any other such label. This may be achieved by sorting the memory constituting the library of forms so as to group together forms having particular metadata and/or labels together, so as to extract en bloc these forms form the step of comparison.

Meanwhile, labels may be applied to any arbitrary set of forms, so as to further characterize a form, or a relationship, such as a conceptual association, between forms. A common label may be used to associate different views of a same object, which may be completely different visually.

Similarly, categories of forms may be characterized by the average radius value of the linear features, and/or the variance of the radius value of the linear features. For example, a rectangle may be differentiated from a square by the fact that the variance of the radius values will be approximately zero for a square, and greater than zero for a rectangle.

On this basis, the step of determining which said candidate form corresponds most closely to the subject form may comprise a further step of preselecting candidate forms from the reference form set on the basis of a correspondence between metadata data, defining a category of forms, of the linear features constituting the subject form and the variance of the opening angle of the linear features constituting the subject form and said metadata for each reference form in said reference form set.

The reference forms in a memory storing the reference form set may conveniently be sorted by these values so as to group said reference forms by a similarity of said respective metadata.

The metadata may further comprise the average of the radius of the linear features constituting that candidate form, and the variance of the radius of the linear features constituting that candidate form.

While the example of figure 9 assumes the definition of rectangular regions, it will be appreciated that any arbitrary definition of regions may be provided. Typically, these regions will interlock so as to cover the entirety of the two dimensional space, or at least those parts of it which correspond to forms occurring in practice.

In accordance with certain embodiments, the regions may be defined, or redefined, to optimally conform to a learned distribution of linear features in the two dimensional space. This may be achieved for example by processing sample input data (e.g. sample images) in accordance with the methods described herein so as to obtain a sample set of forms comprising linear features defined in terms of an opening angle and a direction based on real world data, and then performing a cluster analysis to as to define regions grouping statistically associated sets of linear features. This may be further tuned so that the number of forms in each region from the sample data tend to converge on an even distribution.

Each form defined in the category of forms comprises at least a Form code word, comprising the region reference code of each of the linear features constituting the form. In accordance with various embodiments for example as described above, each form may additionally comprise any or all of the following additional elements.

- Any codeword may be associated with one or more labels, representing semantic associations. These labels may be used to associate semantically related forms. These labels may be associated automatically, on the basis of an automatic detection of common characteristics, using input from other sources such as pre-categorized training images, manually from a user, or any other mechanism as may occur to the skilled person or any combination of these approaches.
- Any codeword may be associated with a unique reference code such as a serial code or other identifier.
- Any codeword may be associated with statistical descriptors of the form concerned. These may comprised for example any or all of the average of the opening angle of the linear features constituting that form and the variance of the opening angle of the linear features constituting that form the average of the radius of the linear features constituting that form and the variance of the radius of the linear features constituting that form.
- Any codeword may comprise the radius value of each linear feature constituting the form.

In the preceding discussion, transformations of a form in an x-y plane (translation, reflection, scaling, rotation, etc.) may be defined by shifting a value of the First Angle of the linear features constituting that form in a two dimensional space representing opening angle values in a first said dimension, and direction values in a second said dimension. Meanwhile, it may be imagined that the x-y plane belong to a notional three dimensional space. In such a context, further transformations of the form corresponding to rotations about any axis in the an x-y plane may be envisaged. Such rotations may be defined by shifting a value of the Opening Angle of the linear features constituting that form in a two dimensional space representing opening angle values in a first said dimension, and direction values in a second said dimension.

In certain embodiments, the library of forms may comprise a plurality of forms corresponding to different views (e.g. subject to transformations as described above, and in particular rotations about any axis in the an x-y plane), so as to define a set of forms. Such a set of forms may be associated by means of a common categorization. Where such sets of forms are defined, when a subject form is compared to a candidate form as described above, where a candidate form is associated with a set of forms, the comparison may be made with regard to each of the forms in the set associated with the candidate form, and an average alignment coefficient calculated across the set of forms. The candidate form or set of forms determined to best match the subject form may then be whichever has the highest average alignment coefficient. This approach means that a particular object may successfully be recognized regardless of its orientation. The output of the matching process may comprise the categorization, and the orientation.

It will be appreciated that the approach of describing a three dimensional object as an associated set of views, each view comprising a form defined in terms of linear features described in a two dimensional space , which may be manipulated in space (translation, reflection, scaling, rotation, etc.) by moving values of the First Angle and or Orientation Angle of the linear features constituting that form in a two dimensional space representing opening angle values in a first said dimension, and direction values in a second said dimension (and optionally a third dimension reflecting radius), provides a particularly compact representation compared to conventional three dimensional models, and one which may be manipulated and compared to other forms with exceptional calculation efficiency.

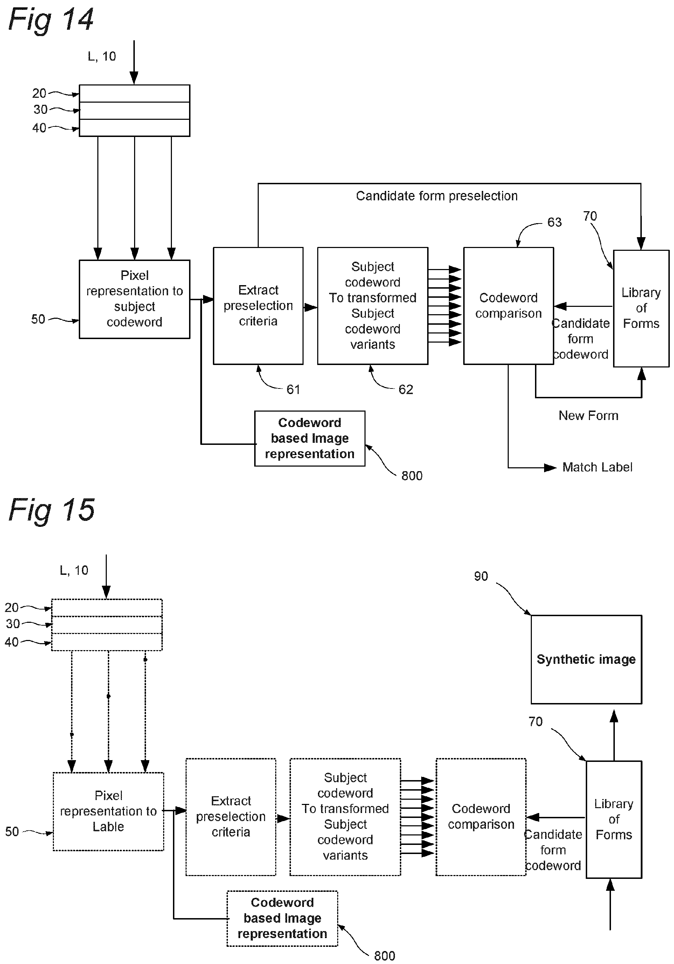

Figure 14 presents a first schematic system structure in accordance with an embodiment addressing certain data sequence input scenarios.

Figure 14 presents schematically the functional units 20, 30 and 40 for example as described above, coupled to produce a semantic representation of input intensity data 11, for example as described above.

Additionally, as shown in figure 14, there is provided a pixel representation to codeword conversion operation 50, which receives semantic representations of incoming data in the prescribed format to obtain the subject form codeword. Characteristics of the incoming subject form may be extracted by characterisation module 61, and transmitted to library of forms 70. As described above, the characteristics may comprise label information, statistical information, etc. As described above, variants comprising the subject codeword to which various transformations have been applied may be generated by transformation module 62. The library of forms outputs candidate forms for comparison in comparison unit 63, with the subject codeword and any transformed subject codewords, and a matching value obtained for each pairing of subject form - candidate form, as discussed above, and the best match selected. An identifier such as a unique reference code for the candidate form offering the best match may be output, together, optionally with an identifier of the transformation variant achieving the best match. The candidate forms output by the Library of forms may comprise all entries therein, or a subset, which may be selected on the basis of the information provided by module 61. The comparisons may be performed in series or in parallel, or a combination of the two.

As discussed above, if no candidate form achieves a satisfactory matching value, the subject form may be added to the library of forms 70.

As such, a library of recurring codewords in a particular input sequence, which may correspond to an image, a set of images or any other intensity data input as described above may be compiled in the Library, such that a learning operation is performed.

Meanwhile, it will be appreciated that the sequence of codeword values may also be seen to constitute a representation of a particular input sequence (image or the like).

As shown in figure 14, a module 800 may store one or more sets of code words representing one or more particular input sequences.

On this basis, it will become apparent that a system such as shown in figure 11 may be further adapted for the synthetic regeneration of stored images.

Figure 15 presents a second schematic system structure in accordance with an embodiment addressing certain data sequence output scenarios.

Figure 15 presents schematically the functional units 20, 30 and 40, 61, 62, 63 for example as described above in dotted lines, indicating that these units may not be operational in the present embodiment. Figure 15 furthermore presents elements 70 and 800 substantially as described with reference to figure 14. As shown, the code word based image representation 800 receives a query 801 designating a particular representation as previously stored as discussed with reference to figure 14. This may optionally be accompanied by transformation information indicating a transformation to be applied to the specified form. This causes the output of the sequence of the code word previously stored as a representation of the designated input. This code word is fed to the code word library 70, which outputs the corresponding values for each code word in turn. These values are mapped to a data space 90 so as to constitute a new image. In accordance with the principles of the approach described above, this new image (or dataset) may be expected to correspond substantially to the original image that constituted the basis for the entry in the representation memory 800, designated by reference 801.

As such, embodiments may provide a convenient mechanism for encoding and storing data such as image data in a compressed form.

While the approach described above relate to the recreation of a previously encoded image, it will be appreciated that a similar approach may be adopted for the generation of any arbitrary image. It may be imagined that code words as discussed above may be associated with semantic content that may also be meaningful to a human user.

Alternatively, a translation operation may be envisaged in which a human taxonomy of objects may be mapped onto code words as described above.

In any case, a code word or set of code words conveying the required meaning may be submitted.

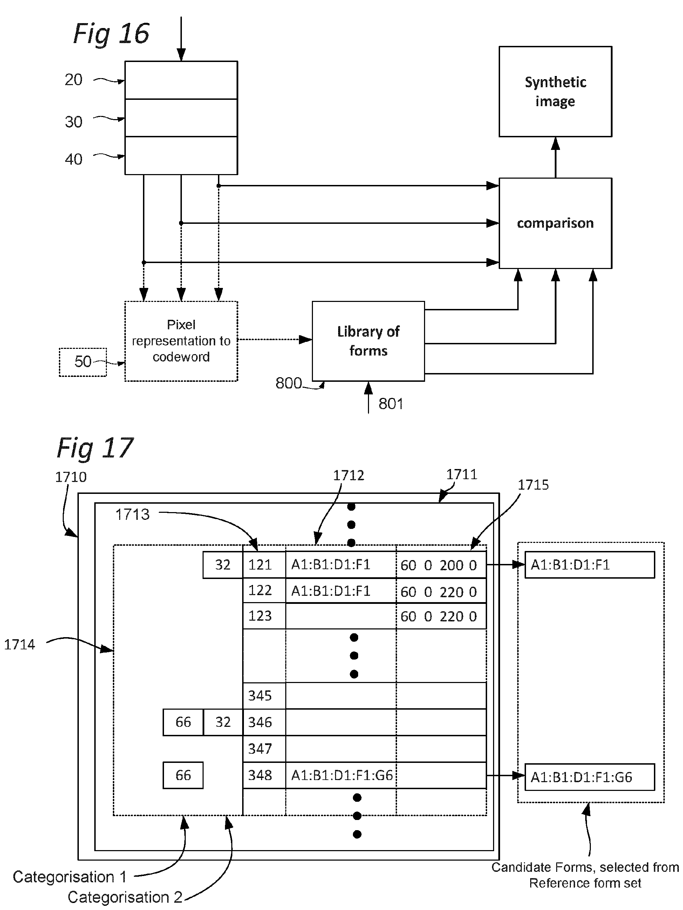

Figure 16 presents a first schematic system structure in accordance with an embodiment addressing certain data sequence comparison scenarios.

Figure 16 presents schematically the functional units 20, 30 and 40, 61, 62 and 63, 70, 80 and for example as described above.

It has been described with reference to figure 15 how arbitrary data sets may be generated on the basis of the selection of one or more code words. In certain embodiments this approach may be extended to provide a mechanism for searching for a particular element in a dataset. For example, the scenario of a searching for a set of keys may be considered. In accordance with the approach discussed with reference to figure 14, a set of code words describing a set of keys may be defined, and provided as target input 71. In accordance with the preceding mechanisms, the corresponding semantic values will be output buy the code word library. Meanwhile, in parallel, data reflecting the environment (such as a sequence of images constituting a video stream exploring the physical location in which the keys are expected to be found in which the search is to be performed are processed via elements 20, 30 and 40 as described above. In this case rather than being converted to code words and presented to the code word library, the values may be compared with those output by the code word library in a comparison unit 75, for example by means of the matching value calculation as described above. Corresponding elements from the environment may contribute to the compilation of a candidate image by image generator 90. These candidate images may be presented to a user for selection of the preferred result, or a determination of the degree of correspondence between each candidate and the target input may be calculated, and the best match automatically selected. Each candidate image may be associated with metadata, which may for example help situate the image in the original environment (so as to specify the location of the keys for example). Additionally or alternatively, any candidate image meeting a predetermined similarity threshold may be flagged in real time. For example, this may be achieved by presenting a modified version of the incoming environment data in which the data corresponding to the candidate image is highlighted e.g. a salient according to the language in the art.

Accordingly, the operations described with reference to figures 10, 11a, 11b, 11d, 11d, 12 and 13 may additionally comprise receiving an indication of a target form belonging to a second set of candidate forms each defined in said specified format in terms of a set of one or more said regions, for identification in an input dataset, decomposing the target form to obtain a graphical representation thereof, using the graphical representation as a classifier of the incoming dataset, and applying the resulting classified data as a salient.

It will be appreciated that while the approaches described with reference to figures 4 to 16 are operable on the basis of a set of values provided at a single scale, they may also advantageously be combined with the approach of figures 2a and/or 2b and/or 3 for example, where representations of the same input data are obtained at different scales. In accordance with certain embodiments, MA, VA and dVA values may be obtained from the same basic data, at a series of respective scales for example as described with reference to figures 2a and/or 2b and/or 3. Each of these sets of values may then be processed to extract linear features as discussed for example with reference to figures 2 to 10. At this stage, rather than simply concatenating the linear features extracted from a particular set of MA, VA and dVA values (corresponding to a particular scale), a synthetic representation may be obtained by re-scaling all of the detected linear features to as to obtain new representations as a common scale. For example, if each stage of decimation in module 30 as described above applies a decimation of three, the radius values of linear features detected in the MA, VA and dVA values output by the first level of processing in units 30a, 40a may be multiplied by 3, the linear features detected in the MA, VA and dVA values output by the first level of processing in units 30b, 40b may be multiplied by 9 and so on. The scale compensated linear features may then be combined in a single unified synthetic representation, which may then be processed to extract the unique linear features best representing the visible forms. These features may be enchained and encoded for output as a final representation of the Form in a code word as discussed with respect to figure 9 for example. It will be appreciated that certain characteristics may be better captured at different scales- for example, a sharp corner of a geometrical form may be detected as such only at a relatively large scale, and smoothed out to a curve at lower levels of granularity, while larger features may be distractingly broken into arbitrary sub-parts at the same large scale. By combining elements detected at all levels, and extracting the definition best defining the feature as a whole across those levels, the best scale free representation is obtained.

Since as discussed above a linear feature will have to fall within a defined region (e.g. a 21 pixel diameter circle according to certain embodiments as described above), it may be necessary to assess an image at successive scales, i.e. successive levels of decimation, in order to properly qualify a large linear feature (e.g. as a straight line or curve).

Meanwhile, to ensure a successful enchainment, enabling the association of the linear features of a particular form, it may be necessary to gather all of the elements, with a simple functional enchainment.

These two considerations imply the knowledge of level of decimation permitting complete representation of the form. All forms tend to become a circle. A calculation of the median of a histogram of the values of VA by level makes it possible to make this determination. It has been found experimentally that a median value of VA greater than 3 provides a suitable threshold.

The greater the level of decimation, the easier it is to achieve the enchainment, since the number of segments tends to be smaller, in view of the lower degree of perceivable complexity. It is accordingly useful to start the enchainment at a high level, and to progressively lower the chaining scale by factors of three (or whatever factor is retained in the overall multi scale implementation), to facilitate the enchainment by comparison with the identified linear features at that level. Optionally, the linear features defined at the lowest level may be preferentially retained, so as to achieve the highest precision.

On this basis, the lower the level of enchainment, the longer the code word defining the form becomes. Depending on the level of learning, for complex forms, the memorization of the form corresponds to a code word at a particular level of decimation. A comprise may be struck between word length and precision.

Accordingly, a strong preference for categorisation may tend to minimise the overall size of the overall memory requirement- a ball, a bicycle wheel, a shirt button may all be categorised as round shapes, thereby reducing the overall length of the code word. The overall memory requirement is thus the product of the number of categorisations and the average length of code words.

Figure 17 provides an overview of an exemplary data structure storing forms as discussed above.

As shown in figure 17, a library of forms 1710 comprises a reference form set 1711, form which candidate forms may be drawn as described above. Each form is defined primarily by a form code word 1712 concatenating the codes defining each of the linear features defining the form as described above. Each form code word 1712 may be associated with a unique reference code 1713, and one or more categorization values, which may constitute category labels 1714. Each code word may also be associated with Form code word metadata 1715, which may include for example the average opening angle, variance of the opening angle, average radius, variance of the radius, etc, as described above.

It may be noted that it is a characteristic of the described approach that operations and results are inherently explicable- the features extracted from any dataset, and the intervening operations may be recorded, and walked back through to understand how any particular result was achieved. This is an important distinction with respect to many other comparable mechanisms, in particular those based on neural network implementations.

Typically, the area of silicon occupied by the various functions determines the price of the product. Meanwhile, energy consumption of the system should be as low as possible, and the power dissipation is critical. Conversely, reductions in the silicon feature size reduce the energy consumption of the function, but lead to an increased leakage current. Embodiments may be seen as addressing these considerations by creating a super-neuron, which covers the entirety of the planar data set, with a transit path defined virtually by n neurons functioning at a frequency f, thereby achieving a synchronous frequency N=n.f. For example, for an image dataset of 4 Megapixels (4000000 pixels) operating with a sensor at 100 frames per second, this would require an equivalent synchronous Frequency of F=400MHz, which is well within the capacity of current technologies.

Accordingly, semantic information may be extracted from a matricial data set such as a bitmap image and encoded by downsampling the original data to plurality of reduced resolution data sets corresponding to successive reductions in scale by a predetermined factor (such as a factor of three). For each position in each reduced resolution data sets a respective matrix approximating a circle having a diameter equal to twice said factor, plus one, (i.e., 7 where the scaling factor is 3) may be selected. For each selected matrix, the average of the edge orientation across the matrix weighted by the energy value of the position under consideration (MA), the variation of the orientations across the matrix (VA) and the local variation with respect to the preceding said position (dVA) may be extracted. New datasets compiling the determined values of MA, VA and dVA provide a semantic representation of the underlying data.

Datasets compiling values of local average of the edge orientation weighted by intensity, the local variation of the orientations across the matrix (VA) and the local variation with respect to the preceding position (dVA) may provide a semantic representation of the matricial data from which they are derived. Semantic content may be further encoded by compiling a regional average angular deviation map comprising a regional average angular deviation for each intermediate cell and determining a regional average angular deviation for said respective intermediate cell from an average of said angular deviation of selected region cells whose angular deviation is within a predetermined angular margin of 90° of the regional average angular deviation, where such cells are determined to correspond to an arcuate linear feature discernible in the original dataset. An associated local minimum within the regional average angular deviation map may be selected as defining the centre of the linear feature.

A form comprising Linear Features discernible in a data space may be encoded by defining each linear feature in terms of an opening angle between 180° and -180° and a direction between 0 and 360°, where each linear feature may be specified by reference to one of a set of predefined contiguous, non-overlapping regions in a two dimensional space representing opening angle values in a first said dimension, and direction values in a second said dimension, where said set of ranges cover in aggregate the entirety of said two dimensional space.

It will be appreciated that the different functional units described above (20, 30, 40, 50, 60, 70, and their respective subunits etc.) have been described as implementing particular discreet operations for the sake of clarity and convenience of explanation. The skilled person will understand that alternative groupings of operations, or no such groupings may be envisaged without interfering with the operation of the invention. For example, any grouping of operational units may be conveniently performed in a single module. In many implementations, multiple instances of certain modules may be required, in which case multiple instances of certain such units may be implemented in a single module, by providing multiple physical implementations of particular units, or by operating certain units at a higher rate of operation so as to process multiple sets of data within one cycle of the overall system, or any combination of these approaches.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the mechanisms discussed above with reference to figures 2 to 10. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including IoT (Internet of Things) devices, head mounted displays with or without see through technology, glasses or any device allowing the display of lines or the like.

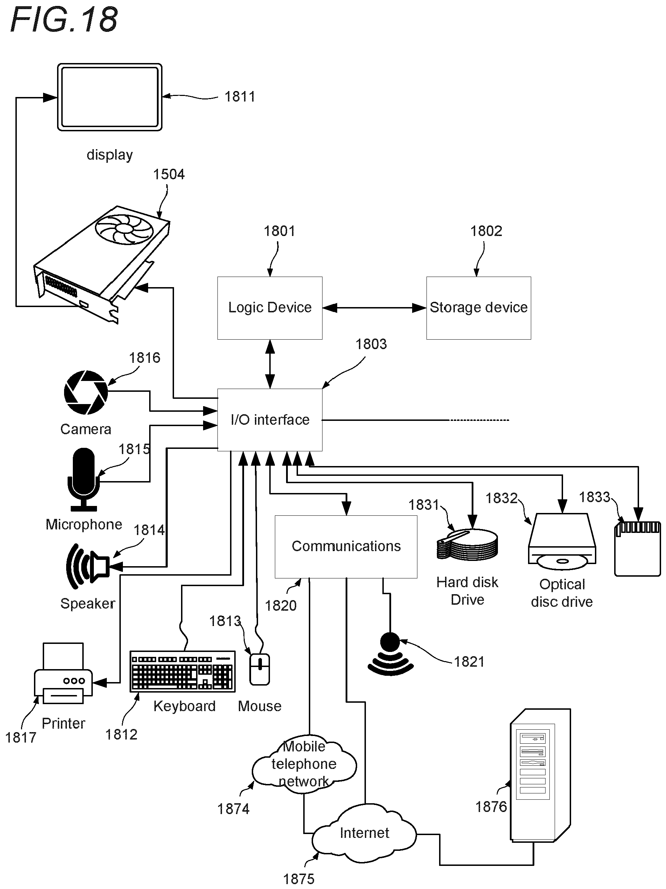

Figure 18 shows a generic computing system suitable for incorporating or implementing processing in accordance with certain embodiments of the invention.

A shown in figure 18, a system includes a logic device 1801 and a storage device 1502. The system may include a graphics processor 1804. The graphics processor may be adapted as described above with respect to figures 2a to 17. The graphics processor may provide image data to a display subsystem 1811, which may constitute a planar dataset in accordance with the invention.

Logic device 1801 includes one or more physical devices configured to execute instructions. For example, the logic device 1801 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 1801 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 1501 optionally may be distributed among two or more separate devices, which may be remotely located and/or configured for coordinated processing. Aspects of the logic device 1101 may be virtualized and executed by remotely accessible, networked computing devices configured in a cloud-computing configuration.

Storage device 1802 includes one or more physical devices configured to hold instructions executable by the logic device to implement the methods and processes described herein. When such methods and processes are implemented, the state of storage 1802 device may be transformed-e.g., to hold different data.

Storage device 1802 may in particular comprise, incorporate or implement an associative memory as described above, for performing the operations described for example with respect the label library 70 as described above.

Storage device 1802 may include removable and/or built-in devices. Storage device may be locally or remotely stored (in a cloud for instance). Storage device 1802 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 1803 adapted to support communications between the logic device 1801 and further system components. For example, additional system components may comprise removable and/or built-in extended storage devices. Extended storage devices may comprise one or more types of storage device including optical memory 1832 (e.g., CD, DVD, HD-DVD, Blu-Ray Disc, etc.), semiconductor memory 1833 (e.g., RAM, EPROM, EEPROM, FLASH etc.), and/or magnetic memory 1831 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 1801 and storage device 1802 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 1802. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 18 may be used to implement embodiments of the invention.

Some or all of the functions of the above embodiments may be implemented in the graphics processor 1804. Some or all of the functions of the above embodiments may be implemented by the way of suitable instructions stored in storage device 1802 and executed by logic device 1801. Information reflecting or defining the which planar dataset, or derived planar datasets, matrix cell set, or any other the other data constructs defined above, energy values, stored patterns, labels, filters, orientation values, weighting factors, opening angle, first angle or other form metadata or characteristics, or the like and so on may be stored in storage device 1802, 1831, 1832, 1833. The functions of any or all of the operational units 10, 20, 30, 40, 50, 60, 70, 800 or any of their respective subunits may similarly be implemented by a program performing the required functions, in communication with additional dedicated hardware units as necessary. The display 1811 may display the graphical representation of the planar dataset in accordance with the invention. The camera 1816, microphone 1815, communications interface or otherwise may be the source of the planar dataset. Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

Display subsystem 1811 may include one or more display devices utilizing virtually any type of technology for example as discussed above. Such display devices may be combined with logic device and/or storage device in a shared enclosure, or such display devices may be peripheral display devices. An audio output such as speaker 1814 may also be provided.

When included, input subsystem may comprise or interface with one or more user-input devices such as a keyboard 1812, mouse 1813, touch screen 1811, or game controller (not shown). In some embodiments, the input subsystem may comprise or interface with selected natural user input (NUI) componentry. The input/output interface 1803 may similarly interface with a loudspeaker 1814, vibromotor or any other transducer device as may occur to the skilled person. For example, the system may interface with a printer 1817.

When included, communication subsystem 1820 may be configured to communicatively couple computing system with one or more other computing devices. For example, communication module of communicatively couple computing device to remote service hosted for example on a remote server 1876 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 1874, or a wired or wireless local- or wide-area network. In some embodiments, the communication subsystem may allow computing system to send and/or receive messages to and/or from other devices via a network such as Internet 1875. The communications subsystem may additionally support short range inductive communications with passive or active devices (NFC, RFID, UHF, etc).

The system of figure 18 is intended to reflect a broad range of different types of information handling system. It will be appreciated that many of the subsystems and features described with respect to figure 18 are not required for implementation of the invention, but are included to reflect possible systems in accordance with the present invention. It will be appreciated that system architectures vary widely, and the relationship between the different sub-systems of figure 18 is merely schematic, and is likely to vary in terms of layout and the distribution of roles in systems. It will be appreciated that, in practice, systems are likely to incorporate different subsets of the various features and subsystems described with respect to figure 18.

Examples of devices comprising at least some elements of the system described with reference to figure 18 and suitable for implementing embodiments of the invention include cellular telephone handsets including smart phones, autonomous vehicles, robots, facial recognition and other image processing applications.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A method of encoding a subject form comprising one or more linear features, each said linear feature being defined in terms of an opening angle between 180° and -180° and a direction between 0 and 360°,
   said method comprising the step of associating each said linear feature with one of a set of predefined contiguous, non-overlapping regions in a two dimensional space representing opening angle values in a first said dimension, and direction values in a second said dimension, where said set of ranges cover in aggregate the entirety of said two dimensional space.

2. The method of claim 1 wherein said step of associating comprises a step of determining for each said linear feature an alignment coefficient representing the distance of the position defined by the opening angle value and direction angle of said linear feature in said two dimensional space from the barycenter of each respective said region with which said linear feature is associated.

3. The method of claim 2 wherein a said alignment coefficient is calculated for each said linear feature with respect to each said region in said two dimensional space.

4. The method of claim 2 wherein a said alignment coefficient is calculated for each said region adjacent to the region in which said linear feature falls.

5. The method of claim 2 wherein each said linear feature is further defined by a radius value.

6. The method of any of claims 2 to 5 comprising the further step of providing a first set of candidate forms from a reference form set each defined in terms of a set of one or more said regions, said method comprising a further step of determining that none of said candidate forms corresponds to said subject form to a predetermined threshold, and adding said subject form to said from a reference form set.

7. The method of any of claims 2 to 4 comprising the further step of providing a first set of candidate forms from a reference form set each defined in terms of a set of one or more said regions, said method comprising a further step of determining which said candidate form corresponds most closely to said subject form, and classifying said subject form as an instance of said candidate form corresponding most closely to said subject form.

8. The method of claim 7 wherein said step of determining which said candidate form corresponds most closely to said subject form comprises calculating a matching value corresponding to the mean alignment coefficient of each range constituting said target form correspondingly defined in a respective candidate form, across the regions specified by that respective candidate form, where the candidate form having the highest matching value is deemed to correspond most closely to said subject form.

9. The method of claim 7 or 8 wherein each candidate form is associated with metadata reflecting the average of the opening angle of the linear features constituting that candidate form and the variance of the opening angle of the linear features constituting that candidate form, and wherein said step of determining which said candidate form corresponds most closely to sais subject form comprises a further step of preselecting said candidate forms from a reference form set on the basis of a correspondence between the average of the opening angle of the linear features constituting the subject form and the variance of the opening angle of the linear features constituting the subject form and said metadata for each reference form in said reference form set.

10. The method of claim 9, comprising a further step of sorting said reference forms in a memory so as to group said reference forms by a similarity of said respective metadata, wherein said step of preselecting said candidate forms comprises retrieving said candidate forms from said memory.

11. The method of claim 9 or 10 wherein said metadata further comprises the average of the radius of the linear features constituting that candidate form, and the variance of the radius of the linear features constituting that candidate form.

12. The method of any preceding claim wherein each said linear feature is further defined by a radius value.

13. The method of any preceding claim wherein each said region is associated with a reference code, and wherein each said candidate form is represented by a codeword concatenating said reference codes.

14. The method of any preceding claim in which said regions are defined as rectangular regions in said two dimensional space, corresponding to the intersection of a respective predefined range of opening angle values in said first dimension of said two dimensional space, and a respective predefined range of direction values in said second dimension of said two dimensional space.

15. The method claim 14 wherein the increment in opening angle between each successive predefined range of opening angle values in said first dimension of said two dimensional space is equal to 45°.

16. The method of claim 14 or 15 wherein the increment in direction angle between each successive predefined range of direction angle in said second dimension of said two dimensional space is equal to 45°.

17. The method of any preceding claim whereby said regions are redefined to optimally conform to a learned distribution of linear features in said two dimensional space.

18. The method of any preceding claim comprising a further steps of

   receiving an indication of a target form belonging to a second set of candidate forms each defined in terms of a set of one or more said regions, for identification in an input dataset,
   decomposing said target form to obtain a graphical representation thereof,
   using said graphical representation as a classifier of said incoming dataset, and applying the resulting classified data as a salient.

19. The method of any preceding claim in which the structure of said codeword reflects the sequence of interconnected linear features in a predefined direction of travel.

20. The method of any of claims 1 to 18 in which said regions are assigned a position in a region sequence, and the structure of said codeword reflects said interconnected linear features in the order of the position of the region in said region sequence with which each respected linear feature is associated.

21. A system for encoding a subject form comprising one or more linear features,

   each said linear feature being defined in terms of an opening angle between 180° and -180° and a direction between 0 and 360°,
   said system being adapted to perform the operations of associating each said linear feature with one of a set of predefined contiguous, non-overlapping regions in a two dimensional space representing opening angle values in a first said dimension, and direction values in a second said dimension, where said set of ranges cover in aggregate the entirety of said two dimensional space.

22. A computer program comprising instructions which, when the program is executed by a computer, cause the computer to carry out the method of any of claims 1 to 20.

23. A computer-readable medium comprising instructions which, when executed by a computer, cause the computer to carry out the method of any of claims 1 to 20.

24. A data structure for encoding a subject form comprising one or more linear features, each said linear feature being defined in terms of an opening angle between 180° and -180° and a direction between 0 and 360°, said data structure defining each said linear feature with reference one of a set of predefined contiguous, non-overlapping regions in a two dimensional space representing opening angle values in a first said dimension, and direction values in a second said dimension, where said set of ranges cover in aggregate the entirety of said two dimensional space.

FIG.1

# FIG.2a

## FIG.2b

## FIG.3

```
                    ┌─────────────────┐
                    │      Start      │────  30
                    └─────────────────┘
                             │
                             ▼
        ┌──────────────────────────────────────────┐
        │      Downsample input planar dataset      │────  31
        └──────────────────────────────────────────┘
                             │
                             ▼
        ┌──────────────────────────────────────────┐
    ┌──▶│         For each working dataset...        │────  32
    │   └──────────────────────────────────────────┘
    │                        │
    │                        ▼
    │      ┌──────────────────────────────────────┐
    │  ┌──▶│    For each position in the working    │────  33
    │  │   │                dataset                  │
    │  │   └──────────────────────────────────────┘
    │  │                     │
    │  │                     ▼
    │  │      ┌────────────────────────────────────┐
    │  │      │   Determine average edge orientation,│────  34
    │  │      │                MA                    │
    │  │      └────────────────────────────────────┘
    │  │                     │
    │  │                     ▼
    │  │      ┌────────────────────────────────────┐
    │  │      │  Determine variation of orientations, VA│────  35
    │  │      └────────────────────────────────────┘
    │  │                     │
    │  │                     ▼
    │  │      ┌────────────────────────────────────┐
    │  │      │  Determine local variation of VA, dVA│────  36
    │  │      └────────────────────────────────────┘
    │  │                     │
    │  │                     ▼
    │  │                  ╱───────╲
    │  └─────────────────╱ All positions╲────  37
    │                    ╲ processed?   ╱
    │                     ╲───────╱
    │                         │
    │                         ▼
    │                     ╱───────╲
    └────────────────────╱ All datasets╲────  38
                         ╲ processed?  ╱
                          ╲───────╱
                              │
                              ▼
                    ┌─────────────────┐
                    │       End       │────  39
                    └─────────────────┘
```

## FIG.4a

MA

## FIG.4b

VA

## FIG.4c

dVA

## FIG.4d

*FIG.5*

43
dVA

42
VA

41
MA

410

401

412

413

45a 45b 45c

452

**Angular Deviation Map**

46

461

FIG.6

FIG.7

## FIG.8

Start — 80

compiling a regional average angular deviation map — 81

identifying an intermediate cell corresponding to a local minimum — 82

End — 83

## FIG.9a

θ

α

r

## FIG.9b

θ

r

α=180°

## FIG.10

Fig 11a

910

First angle θ

Fig 11b

920

First angle θ

Fig 11c

930

First angle θ

Fig 11d

940

First angle θ

FIG.12

Start — 1201

Associate linear feature with region — 1202

All linear features associated? — 1203

End — 1204

Fig 13

## Fig 14

## Fig 15

## Fig 16

## Fig 17

Categorisation 1

Categorisation 2

Candidate Forms, selected from Reference form set

# FIG.18

display 1811

1504

1801 Logic Device

1802 Storage device

1803 I/O interface

1816 Camera

1815 Microphone

1814 Speaker

1817 Printer

1812 Keyboard

1813 Mouse

1820 Communications

1821

1831 Hard disk Drive

1832 Optical disc drive

1833

1874 Mobile telephone network

1875 Internet

1876

Europäisches Patentamt
European Patent Office
Office européen des brevets

# EUROPEAN SEARCH REPORT

Application Number

EP 22 30 6221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEHEL AMI MEHDI ET AL: "Efficient Feature Extraction for Shape-Based Image Retrieval", JOURNAL OF APPLIED SCIENCES, vol. 8, no. 13, 15 June 2008 (2008-06-15), pages 2378-2386, XP093018359, PK ISSN: 1812-5654, DOI: 10.3923/jas.2008.2378.2386 * page 2380, figures 2-4 * | 1-7, 9-19, 21-24 | INV. G06V10/44 G06V10/46 |
| X | ARJUN PARAMARTHALINGAM ET AL: "Extraction of compact boundary normalisation based geometric descriptors for affine invariant shape retrieval", IET IMAGE PROCESSING, IET, UK, vol. 15, no. 5, 26 December 2020 (2020-12-26), pages 1093-1104, XP006110934, ISSN: 1751-9659, DOI: 10.1049/IPR2.12088 * sections 3.2.2 and 3.2.5; figure 4a * | 1-7, 9-19, 21-24 | |
| A | LAKSONO KURNIANGGORO ET AL: "A survey of 2D shape representation: Methods, evaluations, and future research directions", NEUROCOMPUTING, vol. 300, 10 March 2018 (2018-03-10), pages 1-16, XP055568168, AMSTERDAM, NL ISSN: 0925-2312, DOI: 10.1016/j.neucom.2018.02.093 * the common knowledge in the field of shape representation; the whole document * | 1-24 | TECHNICAL FIELDS SEARCHED (IPC) G06V |

The present search report has been drawn up for all claims

| Place of search | Date of completion of the search | Examiner |
|---|---|---|
| The Hague | 27 January 2023 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

**Patent documents cited in the description**

- FR 2858447

**Non-patent literature cited in the description**

- **MATHIAS SABLÉ MEYER.** *A language of thought for the mental representation of geometric shapes*

- **AMALRIC et al.** The language of geometry: Fast comprehension of geometrical primitives and rules in human adults and preschoolers. *PLoS Comput Biol,* 26 January 2017, vol. 13 (1), 1005273